(19) Europäisches Patentamt / European Patent Office / Office européen des brevets

(11) **EP 3 338 335 B1**

(12) **EUROPEAN PATENT SPECIFICATION**

(45) Date of publication and mention
of the grant of the patent:
**07.04.2021 Bulletin 2021/14**

(21) Application number: **16756779.1**

(22) Date of filing: **22.08.2016**

(51) Int Cl.:
*H02J 3/26* (2006.01)        *H02J 3/08* (2006.01)
*H02J 3/00* (2006.01)

(86) International application number:
**PCT/GB2016/052602**

(87) International publication number:
**WO 2017/032996 (02.03.2017 Gazette 2017/09)**

(54) **SWITCH, DISTRIBUTOR SYSTEM AND METHOD OF ADJUSTING CURRENT IMBALANCE OR PHASE TO NEUTRAL VOLTAGES**

SCHALTER, VERTEILERSYSTEM UND VERFAHREN ZUR EINSTELLUNG DES STROMUNGLEICHGEWICHTS ODER DER PHASE AUF NEUTRALSPANNUNGEN

INTERRUPTEUR, SYSTÈME DISTRIBUTEUR ET PROCÉDÉ DE RÉGLAGE DE DÉSÉQUILIBRE DE COURANT OU DES TENSIONS SIMPLES D'UN RÉSEAU TRIPHASÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2015 GB 201514947**
**08.09.2015 GB 201515909**
**09.05.2016 GB 201608110**

(43) Date of publication of application:
**27.06.2018 Bulletin 2018/26**

(73) Proprietor: **Low Carbon Electric Limited**
**Bolton, Lancashire BL1 7HJ (GB)**

(72) Inventor: **CATON, Martin**
**Bolton**
**Lancashire BL1 7HJ (GB)**

(74) Representative: **HGF**
**1 City Walk**
**Leeds LS11 9DX (GB)**

(56) References cited:
**EP-A1- 2 031 623          EP-A2- 0 567 801**
**WO-A1-2014/191692     WO-A2-2014/053989**
**WO-A2-2015/134494**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**Field of the Invention**

The present invention relates to a three phase switch, a three phase distributor system including a three phase switch, and a method of adjusting current imbalance or phase to neutral voltages in a three phase distributor system.

**Background of the Invention**

In an electrical distribution network of a three phase power system, power is transmitted and distributed through electrical conductors which are termed feeders and distributors. A feeder feeds power from one point of the distribution network to another such that over any specific time interval any particular phase current will be the same at every point along its length. In contrast, a distributor provides single and/or poly phase loads and generators with electrical connections at arbitrary points along its length. Therefore, over a specific time interval the phase current in a distributor may not be the same at every point along its length due to distributed loads or distributed generators sourcing and/or sinking current. Examples of such distributed loads or distributed generators are residential dwellings, solar panel arrays, wind turbines, industrial loads, commercial generators, street lamps or any other individual or aggregated electrical load or generator. In this type of distribution network, the distributed loads and distributed generators can toggle between being net generators and net loads over time. For example, a residential dwelling fitted with solar panel arrays could be a net generator in daylight hours and a net load at night when it is dark. Therefore, distributor phase currents in this type of electrical distribution network can flow in any direction along its length.

The loads or generators sink or source currents along the distributor which result in imbalances in phase currents which impacts on phase to neutral voltages. These imbalances result in return path currents to the common star point of the: transformer for the case of a radial network; or transformers for the case when the network is interconnected; which will be apparent to a person skilled in the art. The return path, which will also be apparent to a person skilled in the art, is referred to as a 'neutral conductor' herein.

WO 2014/191692 A1, EP 0 567 801 A2, WO 2014/053989 A2 disclose phase changing switches for providing the appropriate phase sequence to the loads they feed, e.g. for having electric drives (mainly based on induction machines) rotate in the correct direction.

**Summary of the Invention**

According to aspects of the invention, there is provided apparatus and methods as set forth in the appended claims.

According to an aspect of the invention there is provided a three phase switch for segmenting a three phase distributor in a radial or interconnected network, the three phase switch comprising: three first segment terminals; three second segment terminals; and a plurality of terminal interconnecting components arranged to be selectively configured into at least three configurations, wherein in a first one of the three configurations a first one of the first segment terminals is coupled to a first one of the second segment terminals, a second one of the first segment terminals is coupled to a second one of the second segment terminals and a third one of the first segment terminals is coupled to a third one of the second segment terminals, and in a second one of the three configurations the first one of the first segment terminals is coupled to the second one of the second segment terminals, the second one of the first segment terminals is coupled to the third one of the second segment terminals and the third one of the first segment terminals is coupled to the first one of the second segment terminals, and in a third one of the three configurations the first one of the first segment terminals is coupled to the third one of the second segment terminals, the second one of the first segment terminals is coupled to the first one of the second segment terminals and the third one of the first segment terminals is coupled to the second one of the second segment terminals.

According to another aspect of the invention there is provided a three phase distributor system comprising: a three phase distributor; measuring circuitry arranged to measure voltage and/or current associated with each phase of the distributor; a processor arranged to process measurements provided by the measuring circuitry; and the three phase switch, as described above, disposed between ends of the three phase distributor thereby segmenting the three phase distributor into a first segment coupled to the first segment terminals and a second segment coupled to the second segment terminals, wherein the processor is arranged to communicate with the controller.

According to a further aspect of the invention there is provided a method of adjusting current imbalance or phase to neutral voltages in a three phase distributor system comprising a three phase distributor and at least one three phase switch having first segment terminals and second segment terminals, the at least one three phase switch including a first three phase switch disposed between ends of the three phase distributor thereby segmenting the three phase distributor into a first segment attached to the first segment terminals and a second segment attached to the second segment terminals, the method comprising: determining combined current or maximum voltage values in all segments for every allowable permutation of three phase switch configuration, wherein in a first one of the three configurations, a first one of the first segment terminals is coupled to a first one of the second segment terminals, a second one of the first segment terminals is coupled to a second one of the second segment terminals and a third one of the first segment terminals is coupled to a third one of the second segment terminals, and in a second one of the configurations the first one of the first segment terminals is coupled to the second one of the second segment terminals, the second one of the first segment terminals is coupled to the third one of the second segment terminals and the third one of the first segment terminals is coupled to the first one of the second segment terminals, and in a third one of the configurations the first one of the first segment terminals is coupled to the third one of the second segment terminals, the second one of the first segment terminals is coupled to the first one of the second segment terminals and the third one of the first segment terminals is coupled to the second one of the second segment terminals; comparing the combined current or maximum voltage values in each of the allowable configurations to determine which of the configurations is desired which has a lowest one of the combined current, or maximum voltage values; and configuring the three phase switch into the desired configuration.

According to another aspect of the invention there is provided a method of adjusting phase to neutral voltages or current imbalance in a three phase distributor system as described above, the method including comparing phase to neutral voltages or current imbalances in each segment and in response to the comparing configuring at least one said three phase switch into one of the three configurations.

**Brief Description of the Drawings**

For a better understanding of the invention and to show how the same may be carried into effect, there will now be described by way of example only, specific embodiments, methods and processes according to the present invention with reference to the accompanying drawings in which:

Figures 1A to 1F are schematic circuit diagrams of a three phase switch for segmenting a three phase distributor, when the switch is in different configurations according to an embodiment of the present invention;
Figure 2 is a detailed schematic circuit diagram of the three phase switch of Figures 1A to 1C, according to an embodiment of the present invention;
Figure 3 is a schematic circuit diagram of a three phase distributor system according to a first embodiment of the present invention;
Figure 4 is a schematic circuit diagram of a three phase distributor system according to a second embodiment of the present invention;
Figure 5 is a schematic circuit diagram of a three phase distributor system according to a third embodiment of the present invention;
Figure 6 is a schematic circuit diagram of a three phase distributor system according to a fourth embodiment of the present invention;
Figure 7 is a schematic circuit diagram of a three phase distributor system according to a fifth embodiment of the present invention;
Figure 8 is a schematic circuit diagram of a three phase distributor system according to a sixth embodiment of the present invention;
Figure 9 is a flow chart illustrating a method of adjusting current imbalance or phase to neutral voltages in a three phase distributor system according to an embodiment of the present invention;
Figure 10 is a flow chart illustrating a method of controlling terminal interconnecting components according to an embodiment of the present invention; and
Figure 11 is a detailed schematic circuit diagram of the three phase switch of Figures 1A to 1C, according to another embodiment of the present invention.
Figure 12A and Figure 12B is a schematic sequence of slides 1200 showing how an embodiment of the terminal interconnecting components can be controlled from the three phase switch position of Figure 1A to the three phase switch position of Figure 1B.

**Detailed Description**

The detailed description set forth below in connection with the appended drawings is intended as a description of presently preferred embodiments of the invention, and is not intended to represent the only forms in which the present invention may be practised. In the drawings, like numerals are used to indicate like elements throughout. Furthermore, terms "comprises," "comprising," or any other variation thereof, are intended to cover a non-exclusive inclusion, such that module, circuit, device components, structures and method steps that comprises a list of elements or steps does not include only those elements but may include other elements or steps not expressly listed or inherent to such module, circuit, device components or steps. An element or step proceeded by "comprises ...a" does not, without more constraints, preclude the existence of additional identical elements or steps that comprises the element or step.

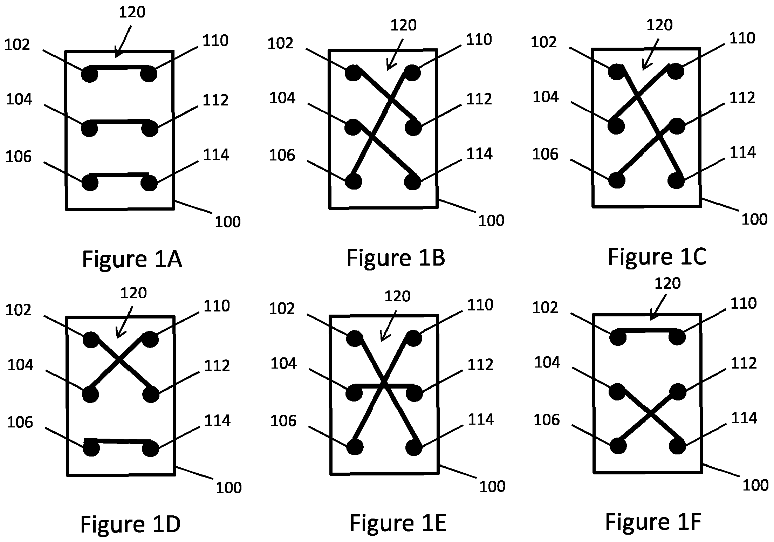

Referring now to figures 1A to 1F, schematic circuit diagrams of different configurations of a three phase switch 100 for segmenting a three phase distributor are shown according to an embodiment of the present invention. As shown in each of figures 1A to 1F, the three phase switch 100 includes three first segment terminals 102, 104, 106 and three second segment terminals 110, 112, 114. There is a plurality of terminal interconnecting components 120 arranged to be selectively configured into at least three configurations as illustrated in figures 1A to 1C.

A first one of the three configurations is shown in figure 1A and when in the first one of the three configurations a first one of the first segment terminals 102 is coupled to a first one of the second segment terminals 110. A second one of the first segment terminals 104 is coupled to a second one of the second segment terminals 112 and a third one of the first segment terminals 106 is coupled to a third one of the second segment terminals 114. The terminal interconnecting component configuration in this first one of the three restrained configurations is represented by the following vector configuration 1:

$(1\ 2\ 3)^T$ where $T$ denotes a transpose function.

A second one of the three configurations is shown in figure 1B and when in the second one of the three configurations the first one of the first segment terminals 102 is coupled to the second one of the second segment terminals 112. The second one of the first segment terminals 104 is coupled to the third one of the second segment terminals 114 and the third one of the first segment terminals 106 is coupled to the first one of the second segment terminals 110.

The terminal interconnecting component configuration in this second one of the three restrained configurations is represented by the following vector configuration 2:

$$\begin{pmatrix} 2 & 3 & 1 \end{pmatrix}^T.$$

A third one of the three configurations is shown in figure 1C and when in the third one of the three configurations the first one of the first segment terminals 102 is coupled to the third one of the second segment terminals 114. The second one of the first segment terminals 104 is coupled to the first one of the second segment terminals 110 and the third one of the first segment terminals 106 is coupled to the second one of the second segment terminals 112. The terminal interconnecting component configuration in this third one of the three restrained configurations is represented by the following vector configuration 3:

$(3\ 1\ 2)^T$. The above three vector configurations 1 to 3 of associated figures 1A to 1C are restrained configurations in which the three phase switch 100 retains the same phase rotation in the distributor's segments. However, in figures 1D to 1F the configurations provide for unrestrained switches thereby allowing phase rotation to be different in the distributor's segments. In figure 1D a first unrestrained configuration is illustrated in which the first one of the first segment terminals 102 is coupled to the second one of the second segment terminals 112. The second one of the first segment terminals 104 is coupled to the first one of the second segment terminals 110 and the third one of the first segment terminals 106 is coupled to the third one of the second segment terminals 114. The terminal interconnecting component configuration in this first one of the three unrestrained configurations is represented by the following vector configuration 4:

$$\begin{pmatrix} 2 & 1 & 3 \end{pmatrix}^T.$$

In figure 1E a second unrestrained configuration is illustrated in which the first one of the first segment terminals 102 is coupled to the third one of the second segment terminals 114. The second one of the first segment terminals 104 is coupled to the second one of the second segment terminals 112 and the third one of the first segment terminals 106 is coupled to the first one of the second segment terminals 110. The terminal interconnecting component configuration in this second one of the three unrestrained configurations is represented by the following vector configuration 5:

$$\begin{pmatrix} 3 & 2 & 1 \end{pmatrix}^T.$$

In figure 1F a third unrestrained configuration is illustrated in which the first one of the first segment terminals 102 is coupled to the first one of the second segment terminals 110. The second one of the first segment terminals 104 is coupled to the third one of the second segment terminals 114 and the third one of the first segment terminals 106 is coupled to the second one of the second segment terminals 112. The terminal interconnecting component configuration in this third one of the three unrestrained configurations is represented by the following vector configuration 6:

$$\begin{pmatrix} 1 & 3 & 2 \end{pmatrix}^{T}.$$

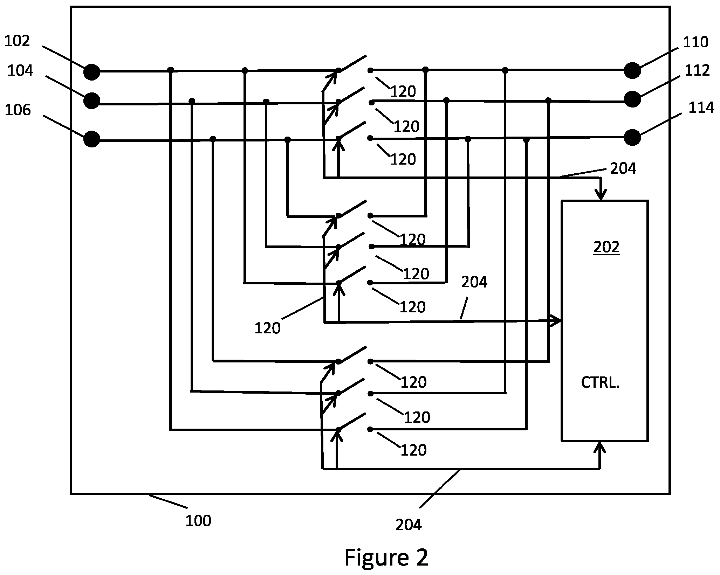

Referring to figure 2 there is illustrated a schematic circuit diagram of the three phase switch 100, according to an embodiment of the present invention. In this embodiment the three phase switch 100 is arranged to provide only the restrained configurations of Figures 1A to 1C. The terminal interconnecting component configuration in this three phase switch 100 includes a controller 202 coupled to the terminal interconnecting components 120 by control and feedback lines 204.

The controller 202 is arranged to selectively control the terminal interconnecting components 120 into the at least three restrained configurations of Figures 1A to 1C. As shown, the terminal interconnecting components 120 are switches selectively controlled and actuated by command signals generated by the controller 202 to provide the three restrained configurations. However, in alternative embodiments of the invention the terminal interconnecting components 120 may comprise individual switches, electro-mechanical circuit breakers, thyristors, transistors or power electronic devices selectively controlled by a controller to provide the three restrained configurations.

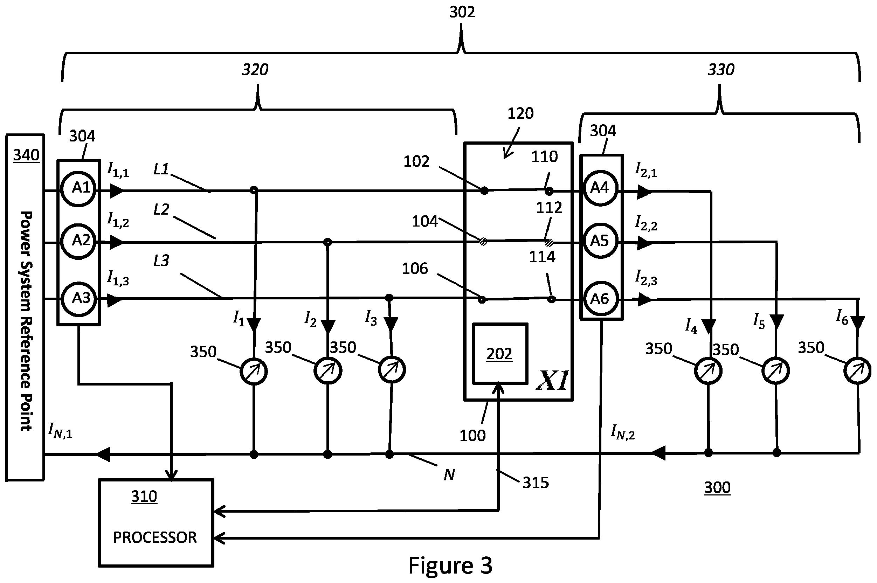

Referring to figure 3 there is illustrated a schematic circuit diagram of a three phase distributor system 300 according to a first embodiment of the present invention. The three phase distributor system 300 includes a three phase distributor 302 comprising three conductors each associated with one of three phases ($L1$, $L2$, $L3$) and an associated neutral conductor (N) all of which are coupled at one end to a power system reference point 340.

The three phase distributor 302 is partitioned into two segments these being a first segment 320 and a second segment 330. There is measuring circuitry 304 arranged to measure current associated with each phase $L1$, $L2$ and $L3$ of the distributor 302. A processor 310 is arranged to process measurements provided by the measuring circuitry 304 and communicate with the controller 202. The three phase switch 100 is disposed between ends of the three phase distributor 302 thereby segmenting the three phase distributor 302 into the first segment 320, coupled to the first segment terminals 102, 104, 106, and the second segment 330 coupled to the second segment terminals 110, 112, 114. Also, the three phase switch 100 is labelled with a unique vector variable *X1* in this embodiment which is used to define its vector representation according to a particular one of the six possible configurations.

In the figure 3 embodiment the measuring circuitry 304 includes ammeters for measuring current in each phase $L1$, $L2$ and $L3$ of the distributor 302. More specifically, the measuring circuitry 304 comprises first segment measuring circuitry A1, A2, A3 arranged to measure current in each phase of the first segment 320 thereby defining an end of the first segment thereof, opposite to the first segment terminals 102, 104, 106. Furthermore, the measuring circuitry 304 comprises second segment measuring circuitry A4, A5, A6 arranged to measure current in each phase of the second segment 330 adjacent the second segment terminals 110, 112, 114.

The processor 310 is coupled to the measuring circuitry 304 via a communication and control line 315 and is arranged to process the measurements provided by the measuring circuitry 304 (A1, A2, A3, A4, A5, A6). The processor 310 is further arranged to provide command signals to the controller 202. These command signals maintain the current configuration of the three phase switch 100, or reconfigure the three phase switch 100 from one of the three restrained configurations into another one of the three restrained configurations of figures 1A to 1C. It will be apparent to a person skilled in the art that the three phase switch 100 may also be reconfigurable from one of the three unrestrained configurations into another one of the three unrestrained configurations of figures 1D to 1F. It will also be apparent that the three phase switch 100 may be reconfigurable from one of the six configurations into another one of the six configurations of figures 1A to 1D.

Also shown are loads or generators 350 that provide for sinking or sourcing currents at different points and on different phases $L1$, $L2$, $L3$ of the distributor. The currents in the system 300 include first segment currents $I_{1,1}$, $I_{1,2}$ and $I_{1,3}$ that flow along respective phases $L1$, $L2$ and $L3$ and are measured by the first segment measuring circuitry A1, A2, A3. Other currents associated with the first segment 320 are $I_1$, $I_2$, and $I_3$ that are the result of the loads or generators 350 along the first segment 320. The leading subscripts of the aforementioned current variables are now explained. Where two integers are present separated by a comma, for example $I_{i,j}$, the first (i) denotes the segment and the second (j) denotes the phase as either 1, 2 or 3. When one integer only is present in the subscript, it represents a unique load or generator integer.

The currents in the system 300 also include second segment currents $I_{2,1}$, $I_{2,2}$ and $I_{2,3}$ measured by the second segment measuring circuitry A4, A5, A6. The second segment currents $I_{2,1}$, $I_{2,2}$ and $I_{2,3}$ are the result of currents $I_4$, $I_5$, and $I_6$ provided by the loads or generators 350 along the second segment 330. Also shown are neutral conductor (N) currents $I_{N,1}$ and $I_{N,2}$ as will be apparent to a person skilled in the art. The leading subscripts in the neutral conductor currents have the following meaning, the first character N defines the variable as being associated with the neutral conductor; and the second character defines the segment to which it belongs.

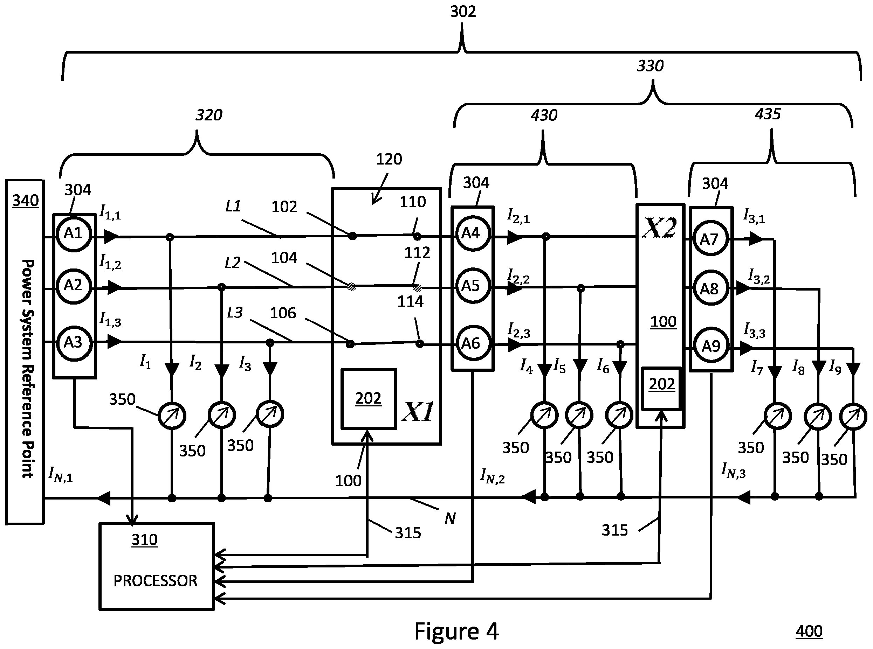

Referring to figure 4 there is illustrated a schematic circuit diagram of a three phase distributor system 400 according to a second embodiment of the present invention. The three phase distributor system 300 includes a three phase distributor 302 comprising three conductors each associated with one of three phases ($L1$, $L2$, $L3$) and the associated neutral conductor (N) all of which are coupled at one end to the power system reference point 340. The three phase distributor system 400 is similar to the three phase distributor system 300 and therefore to avoid repetition only the differences will be described.

The three phase distributor system 400 includes another three phase switch 100 disposed between ends of the second segment 330 thereby segmenting the second segment 330 into a second segment 430 and a third segment 435. In this embodiment the second segment measuring circuitry A4, A5, A6 is arranged to measure current in each phase conductor of the second segment 430 adjacent the second segment terminals of the three phase switch 100 partitioning the second segment 330. Also, the second segment currents $I_{2,1}$, $I_{2,2}$ and $I_{2,3}$ measured by the second segment measuring circuitry A4, A5, A6 are now associated with the second segment 430.

The measuring circuitry 304 comprises third segment measuring circuitry A7, A8, A9 arranged to measure current in each phase of the third segment 435 adjacent the second segment terminals 110, 112, 114 of the three phase switch 100 partitioning the second segment 330.

The processor 310 is coupled to the measuring circuitry 304 and is arranged to process the measurements provided by the measuring circuitry 304 in each of the segments 320, 430 and 435. The processor 310 is further arranged to provide command signals to the controller 202 of each three phase switch 100 in the system 400. These command signals instruct controllers 202 to initiate command signals that result in the physical reconfiguration of one or both of the three phase switches 100 from one of the three restrained configurations into another one of the three restrained configurations of figures 1A to 1C.

The currents in the system 400 also include third segment currents $I_{3,1}$, $I_{3,2}$ and $I_{3,3}$ measured by the third segment measuring circuitry A7, A8, A9. The third segment currents $I_{3,1}$, $I_{3,2}$ and $I_{3,3}$ are the result of currents $I_7$, $I_8$, and $I_9$ provided by the loads or generators 350 along the third segment 435. Each of the three phase switches 100 are labelled with the unique vector variables *X1* and *X2* in this embodiment which are used to define its vector representation according to a particular one of the six possible configurations. Also shown are neutral conductor *(N)* currents $I_{N,1}$ and $I_{N,2}$ and $I_{N,3}$ as will be apparent to a person skilled in the art. Another point that will be apparent to a person skilled in the art is that a transformer may be coupled at the ends of the third segment 435 distal from the three phase switch 100 between the second segment 430 and third segment 435. Additionally, other embodiments may include further three phase switches 100 that further segment the three phase distributor 302 and further transformers could be coupled to the three phase distributor 302.

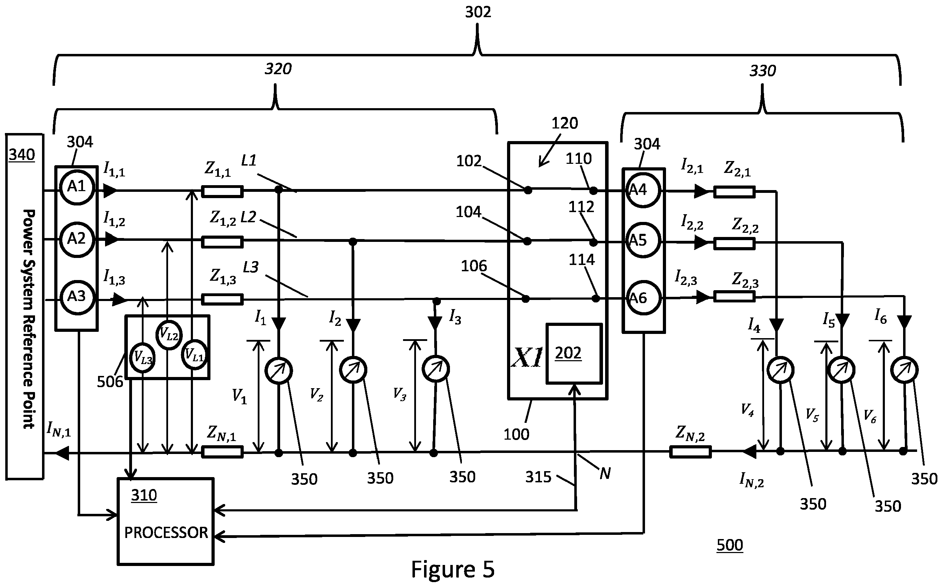

Referring to figure 5 there is illustrated a schematic circuit diagram of a three phase distributor system 500 according to a third embodiment of the present invention.

The three phase distributor system 500 is similar to the three phase distributor system 300 and therefore to avoid repetition only the differences will be described. In this illustration the phase conductor impedances $Z_{1,1}$, $Z_{1,2}$, $Z_{1,3}$ for the first segment 320 and phase conductor impedances $Z_{2,1}$, $Z_{2,2}$, $Z_{2,3}$ for the second segment 330 are shown. Also, the neutral conductor impedances $Z_{N,1}$, for the first segment 320 and impedances $Z_{N,2}$, for the second segment 320 are shown. Also, in addition to the measuring circuitry 304 comprising ammeters A1 to A6 there is additional measuring circuitry 506 which are voltmeters $V_{L1}$, $V_{L2}$, and $V_{L3}$ that are coupled between phase (*L1*, *L2*, *L3*) and neutral *(N)* conductors at the power system reference point end of the distributor's first segment 320. Also, the voltmeters $V_{L1}$, $V_{L2}$, and $V_{L3}$ are coupled to the processer 310. The leading subscripts of the aforementioned impedance variables are now explained. Where two integers are present separated by a comma, for example $Z_{i,j}$, the first (i) denotes the segment and the second (j) denotes the phase as either 1, 2 or 3. Whereas, the first character in the leading subscripts of the neutral conductor impedance defines it as being associated with the neutral conductor when it is an N, whilst the second character in the subscript defines the segment to which it belongs.

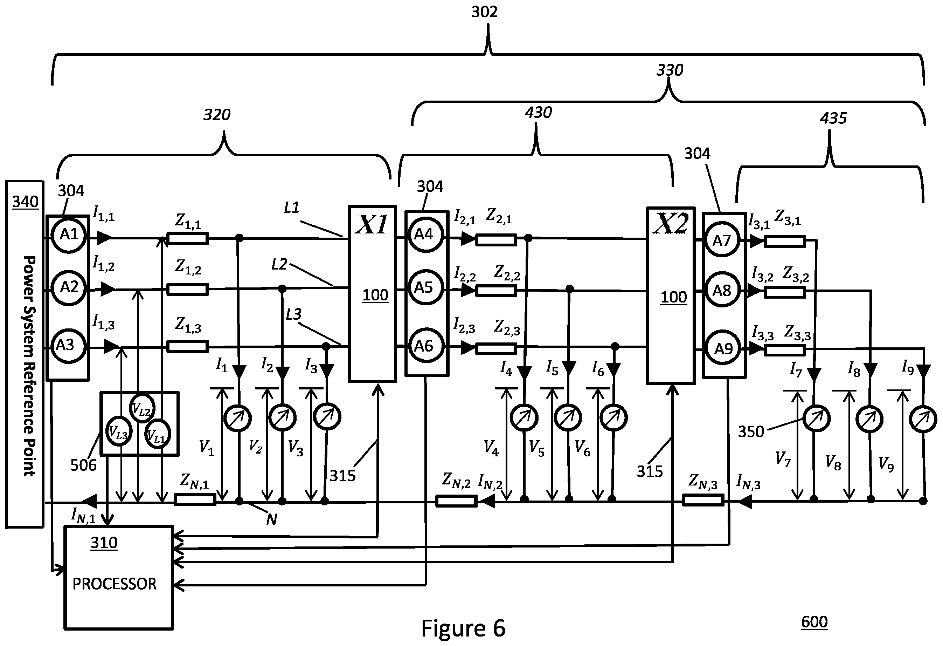

Referring to figure 6 there is illustrated a schematic circuit diagram of a three phase distributor system 600 according to a fourth embodiment of the present invention.

The three phase distributor system 600 is similar to the three phase distributor system 500 and therefore to avoid repetition only the differences will be described. The three phase distributor system 600 includes another three phase switch 100 disposed between ends of the second segment 330 thereby segmenting the second segment 330 into a second segment 430 and a third segment 435. Each of the three phase switches 100 are labelled with the unique vector variables *X1* and *X2* in this embodiment which are used to define its vector representation according to a particular one of the six possible configurations. In this embodiment the second segment measuring circuitry A4, A5, A6, is arranged to measure current in each phase conductor of the second segment 430 adjacent the second segment terminals of the three phase switch 100 partitioning the first segment 320 and second segment 430. Also, the second segment currents $I_{2,1}$, $I_{2,2}$ and $I_{2,3}$ measured by the second segment measuring circuitry A4, A5, A6 are now associated with the second segment 430. The measuring circuitry 304 comprises third segment measuring circuitry A7, A8, A9 arranged to measure current in each phase conductor of the third segment 435 adjacent the third segment terminals 110, 112, 114 of the three phase switch 100 partitioning the second segment 330. The third segment measuring circuitry A7, A8, A9 (ammeters) are coupled to the processer 310. Also, in this illustration the phase conductor impedances $Z_{3,1}$, $Z_{3,2}$, $Z_{3,3}$ for the third segment 435 and neutral conductor impedance $Z_{N,3}$ for the third segment 435 are shown.

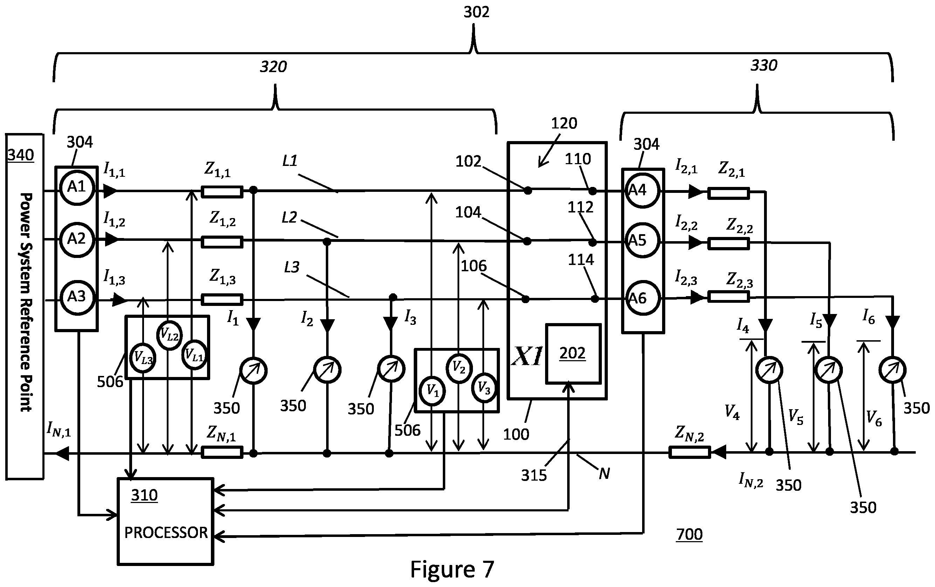

Referring to figure 7 there is illustrated a schematic circuit diagram of a three phase distributor system 700 according to a fifth embodiment of the present invention.

The three phase distributor system 700 is similar to the three phase distributor system 500 and therefore to avoid repetition only the differences will be described. In this illustration the measuring circuitry 506 comprising voltage measurements devices $V_{L1}$, $V_{L2}$ and $V_{L3}$ there is additional measuring circuitry 506 which are voltmeters $V_1$, $V_2$, and $V_3$ that are coupled between phase (*L1, L2, L3*) and neutral (N) conductors at the end of the first segment adjacent to the three phase switch 100. Also, the voltmeters $V_1$, $V_2$, and $V_3$ are coupled to the processer 310.

It will be apparent that for both the systems 400 and 600 that the two three phase switches 100 (a first and second three phase switch) have nine permutations of possible configuration. In a first one of the possible restrained configurations the first one of the first segment terminals 102 is coupled to the first one of the second segment terminals 110. The second one of the first segment terminals 104 is coupled to the second one of the second segment terminals 112 and the third one of the first segment terminals 106 is coupled to the third one of the second segment terminals 114. The first one of the second segment terminals 102 is coupled to the first one of the third segment terminals 110. The second one of the second segment terminals 104 is coupled to the second one of the third segment terminals 112 and the third one of the second segment terminals 106 is coupled to the third one of the third segment terminals 114.

In a second one of the possible configurations the first one of the first segment terminals 102 is coupled to the first one of the second segment terminals 110. The second one of the first segment terminals 104 is coupled to the second one of the second segment terminals 112 and the third one of the first segment terminals 106 is coupled to the third one of the second segment terminals 114. The first one of the second segment terminals 102 is coupled to the second one of the third segment terminals 112. The second one of the second segment terminals 104 is coupled to the third one of the third segment terminals 114 and the third one of the second segment terminals 106 is coupled to the first one of the third segment terminals 110.

In a third one of the possible configurations the first one of the first segment terminals 102 is coupled to the first one of the second segment terminals 110. The second one of the first segment terminals 104 is coupled to the second one of the second segment terminals 112 and the third one of the first segment terminals 106 is coupled to the third one of the second segment terminals 114. The first one of the second segment terminals 102 is coupled to the third one of the third segment terminals 114. The second one of the second segment terminals 104 is coupled to the first one of the third segment terminals 110 and the third one of the second segment terminals 106 is coupled to the second one of the third segment terminals 112.

In a fourth one of the possible configurations the first one of the first segment terminals 102 is coupled to the second one of the second segment terminals 112. The second one of the first segment terminals 104 is coupled to the third one of the second segment terminals 114 and the third one of the first segment terminals 106 is coupled to the first one of the second segment terminals 110. The first one of the second segment terminals 102 is coupled to the first one of the third segment terminals 110. The second one of the second segment terminals 104 is coupled to the second one of the third segment terminals 112 and the third one of the second segment terminals 106 is coupled to the third one of the third segment terminals 114.

In a fifth one of the possible configurations the first one of the first segment terminals 102 is coupled to the second one of the second segment terminals 112. The second one of the first segment terminals 104 is coupled to the third one of the second segment terminals 114 and the third one of the first segment terminals 106 is coupled to the first one of the second segment terminals 110. The first one of the second segment terminals 102 is coupled to the second one of the third segment terminals 112. The second one of the second segment terminals 104 is coupled to the third one of the third segment terminals 114 and the third one of the second segment terminals 106 is coupled to the first one of the third segment terminals 110.

In a sixth one of the possible configurations the first one of the first segment terminals 102 is coupled to the second one of the second segment terminals 112. The second one of the first segment terminals 104 is coupled to the third one of the second segment terminals 114 and the third one of the first segment terminals 106 is coupled to the first one of the second segment terminals 110. The first one of the second segment terminals 102 is coupled to the third one of the third segment terminals 114. The second one of the second segment terminals 104 is coupled to the first one of the third segment terminals 110 and the third one of the second segment terminals 106 is coupled to the second one of the third segment terminals 112.

In a seventh one of the possible configurations the first one of the first segment terminals 102 is coupled to the third one of the second segment terminals 114. The second one of the first segment terminals 104 is coupled to the first one of the second segment terminals 110 and the third one of the first segment terminals 106 is coupled to the second one of the second segment terminals 112. The first one of the second segment terminals 102 is coupled to the first one of the third segment terminals 110. The second one of the second segment terminals 104 is coupled to the second one of the third segment terminals 112 and the third one of the second segment terminals 106 is coupled to the third one of the third segment terminals 114.

In an eighth one of the possible configurations the first one of the first segment terminals 102 is coupled to the third one of the second segment terminals 114. The second one of the first segment terminals 104 is coupled to the first one of the second segment terminals 110 and the third one of the first segment terminals 106 is coupled to the second one of the second segment terminals 112. The first one of the second segment terminals 102 is coupled to the second one of the third segment terminals 112. The second one of the second segment terminals 104 is coupled to the third one of the third segment terminals 114 and the third one of the second segment terminals 106 is coupled to the first one of the third segment terminals 110.

In a ninth one of the possible configurations the first one of the first segment terminals 102 is coupled to the third one of the second segment terminals 114. The second one of the first segment terminals 104 is coupled to the first one of the second segment terminals 110 and the third one of the first segment terminals 106 is coupled to the second one of the second segment terminals 112. The first one of the second segment terminals 102 is coupled to the third one of the third segment terminals 114. The second one of the second segment terminals 104 is coupled to the first one of the third segment terminals 110 and the third one of the second segment terminals 106 is coupled to the second one of the third segment terminals 112.

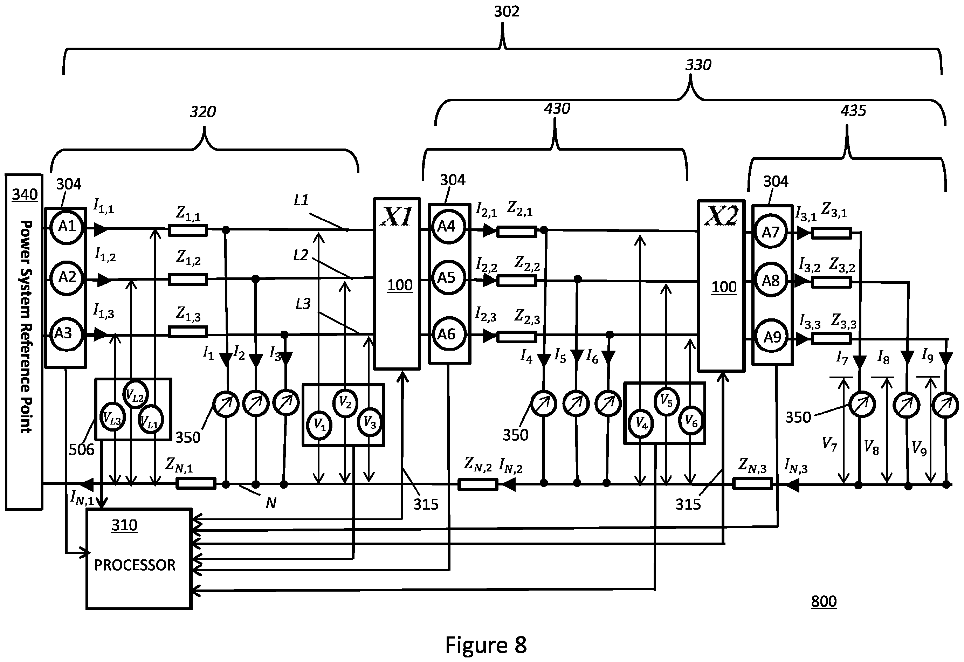

Referring to figure 8 there is illustrated a schematic circuit diagram of a three phase distributor system 800 according to a sixth embodiment of the present invention.

The three phase distributor system 800 is similar to the three phase distributor system 700 and therefore to avoid repetition only the differences will be described. The three phase distributor system 800 includes an additional three phase switch 100 disposed between ends of the second segment 330 thereby segmenting the second segment 330 into a second segment 430 and a third segment 435. Each of the three phase switches 100 are labelled with the unique vector variables *X1* and *X2* in this embodiment which are used to define its vector representation according to a particular one of the six possible configurations. Also in this illustration, the measuring circuitry 506 comprising voltage measurements devices $V_{L1}$, $V_{L2}$, $V_{L3}$, $V_1$, $V_2$, and $V_3$ there is additional measuring circuitry 506 which are voltmeters $V_4$, $V_5$, and $V_6$ that are coupled between phase (*L1, L2, L3)* and neutral (N) conductors at the end of the second segment adjacent to the additional three phase switch 100. Also, the voltmeters $V_1$, $V_2$, and $V_3$ are coupled to the processer 310. The leading subscripts in the voltage variables V define each as being unique.

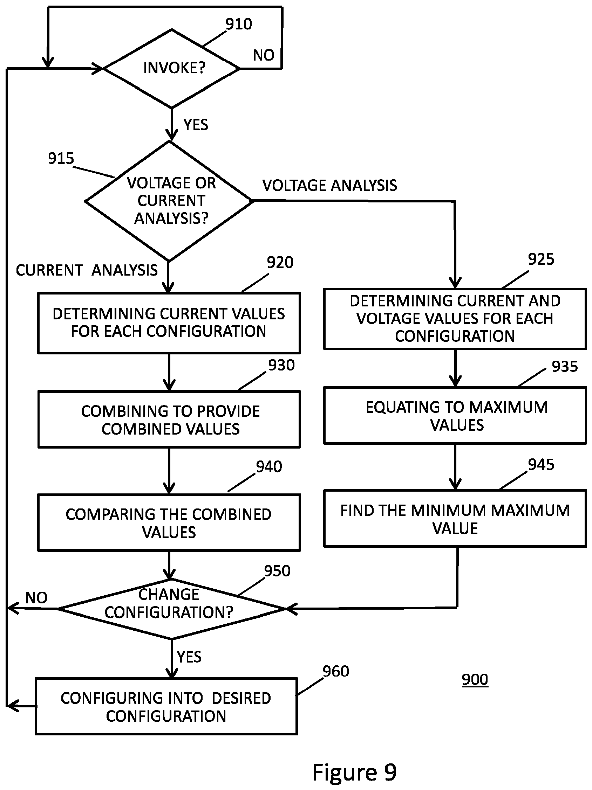

Referring to figure 9 there is a flow chart illustrating a method 900 of adjusting current imbalance or phase to neutral voltages in a three phase distributor system through current or voltage analysis according to an embodiment of the present invention. By way of example, and for illustration purposes only, the method 900 will be described for a radial network with reference to systems 300 to 800 as described herein. The method 900, is typically invoked at a decision block 910 at fixed times in a given 24 hour period for either voltage or current analysis such as: 8am to 5pm for voltage analysis and 5pm to 9am for current analysis; or 7am to 4pm for voltage analysis and 4pm to 7am for current analysis; or 5pm to 10am for current analysis and 10am to 3.30pm for voltage analysis. During such times when load or generator currents may vary considerably on the systems 300 to 800. Alternatively, the method 900 may be invoked at a decision block 910 at any pre-determined time interval examples of which include 7 minute time intervals or intervals at every minute or every 600 minutes, 360 minutes, 30 seconds or any suitable other time interval.

In one embodiment the method 900 can be invoked at a decision block 910 is if any voltage value, measured by the voltage measurement devices 506 shown in systems 500 to 800, exceeds a predetermined value, examples of which include: 250V, 253V and 246V. A decision to perform voltage analysis is made at a block 915 if the method 900 was invoked for a fixed time for voltage analysis or due to: a voltage measurement exceeding a predetermined value; or a change in ambient conditions detected by an appropriate measuring device at a location proximal to the distributor. In regard to the ambient conditions, they include one or more of wind speed or sunlight. Otherwise, a decision at decision block 915 will default to current analysis. In yet a further embodiment the method 900 may be continuously invoked.

The method 900 will now be described which is invoked when current analysis is determined by the processor 310 at a decision block 915. Within the explanation, individual three phase switches 100 are referred to using a unique vector variable from the following sequence: *X1*; *X2* ... *Xn* where *n* is an integer equal to the number of three phase switches 100. The integer *n* also defines the proximity of each three phase switch 100 to the point designated as the power system reference point 340 where the integer 1 is used to denote the three phase switch 100 that is closest to the power system reference and *n* is used to represent the three phase switch 100 that is furthest from the power system reference. Each of the vector variables *X1*; *X2* ... *Xn* elements are defined as follows:

$$X1 = \begin{pmatrix} X1_1 & X1_2 & X1_3 \end{pmatrix}^T$$
$$X2 = \begin{pmatrix} X2_1 & X2_2 & X2_3 \end{pmatrix}^T$$
$$\vdots$$
$$Xn = \begin{pmatrix} Xn_1 & Xn_2 & Xn_3 \end{pmatrix}^T$$

equations (1).

The notation used in equations (1) provides a means to refer to each individual vector element with a leading subscript which defines a specific vector element.

The current analysis method involves a process of determining current values using Kirchoff's current law in systems 300 and 400 for every possible permutation of three phase switch 100 configurations, or combined three phase switch 100 configurations when there are $n$ three phase switches 100. Initially during the block 920 determination, load or generator currents are calculated using current measurements made in the selected one of the three phase switch 100 configurations. Using system 300 as the example: when the first one of the restrained configurations is selected by the three phase switch 100 that partitions segments 320 and 330, the load or generator 350 currents are calculated using Kirchoff's current Law as follows:

$$I_1 = I_{1,1} - I_{2,1}; \quad I_2 = I_{1,2} - I_{2,2}; \quad I_3 = I_{1,3} - I_{2,3}; \quad I_4 = I_{2,1}; \quad I_5 = I_{2,2}; \text{ and } I_6 = I_{2,3} - \text{ equations (a)}.$$

When the second one of the restrained configurations is selected by the three phase switch 100 that partitions segments 320 and 330, the load or generator 350 currents are calculated using Kirchoff's current Law as follows:

$$I_1 = I_{1,1} - I_{2,2}; \quad I_2 = I_{1,2} - I_{2,3}; \quad I_3 = I_{1,3} - I_{2,1}; \quad I_4 = I_{2,1}; \quad I_5 = I_{2,2}; \text{ and } I_6 = I_{2,3} - \text{ equations (b)}.$$

When the third one of the restrained configurations is selected by the three phase switch 100 that partitions segments 320 and 330, the load or generator 350 currents are calculated using Kirchoff's current Law as follows:

$$I_1 = I_{1,1} - I_{2,3}; \quad I_2 = I_{1,2} - I_{2,1}; \quad I_3 = I_{1,3} - I_{2,3}; \quad I_4 = I_{2,1}; \quad I_5 = I_{2,2}; \text{ and } I_6 = I_{2,3} - \text{ equations (c)}.$$

Generically, for system 300, *X1* is equated to the vector representation of the selected one of the three phase switch 100 configurations and the following set of general equations is applied:

$$I_6 = I_{2,3}; \quad I_5 = I_{2,2}; \quad I_4 = I_{2,1}; \quad I_3 = I_{1,3} - I_{2,X1_3}; \quad I_2 = I_{1,2} - I_{2,X1_2}; \text{ and } I_1 = I_{1,1} - I_{2,X1_1} \quad \text{equations (2)}.$$

Generically, for system a 400, the vector variables *X1* and *X2* are each equated to their respective vector representations that reflect the selected one of their particular three phase switch 100 configurations and the load or generator currents are calculated using the set of general equations shown below:

$$I_9 = I_{3,3}; \quad I_8 = I_{3,2}; \quad I_7 = I_{3,1}; \quad I_6 = I_{2,3} - I_{3,X2_3}; \quad I_5 = I_{2,2} - I_{3,X2_2}; \quad I_4 = I_{2,1} - I_{3,X2_1};$$
$$I_3 = I_{1,3} - I_{2,X1_3} - I_{3,X2_{X1_3}}; \quad I_2 = I_{1,2} - I_{2,X1_2} - I_{3,X2_{X1_2}}; \text{ and } I_1 = I_{1,1} - I_{2,X1_1} - I_{3,X2_{X1_1}} \quad \text{equations (3)}.$$

Generically, for a system with between three and $n$ three phase switches 100, the vector variables *X1*, *X2* ... *Xn* are each equated to their respective vector representations that reflect the selected one of the three phase switch 100 restrained configurations (vector configurations 1 to 3), and the load or generator currents are calculated using the following set of general equations:

$$I_{3k} = I_{k,3}$$
$$I_{3k-1} = I_{k,2}$$
$$I_{3k-2} = I_{k,1}$$
$$I_{3k-3} = I_{k-1,3} - I_{k,Xn_3}$$
$$I_{3k-4} = I_{k-1,2} - I_{k,Xn_2}$$
$$I_{3k-5} = I_{k-1,1} - I_{k,Xn_1}$$
$$I_{3k-6} = I_{k-2,3} - I_{k-1,Xn-1_3} - I_{k,Xn_{Xn-1_3}}$$
$$I_{3k-7} = I_{k-2,2} - I_{k-1,Xn-1_2} - I_{k,Xn_{Xn-1_2}}$$
$$I_{3k-8} = I_{k-2,1} - I_{k-1,Xn-1_1} - I_{k,Xn_{Xn-1_1}}$$
$$\vdots$$
$$I_{3k-(3k-3)} = I_{k-(k-1),3} - I_{k-(k-2),X1_3} - I_{k-(k-3),X2_{X1_3}} - \cdots - I_{k-(k-k),Xn_{Xn-1 \cdot X1_3}}$$
$$I_{3k-(3k-2)} = I_{k-(k-1),2} - I_{k-(k-2),X1_2} - I_{k-(k-3),X2_{X1_2}} - \cdots - I_{k-(k-k),Xn_{Xn-1 \cdot X1_2}}$$
$$I_{3k-(3k-1)} = I_{k-(k-1),1} - I_{k-(k-2),X1_1} - I_{k-(k-3),X2_{X1_1}} - \cdots - I_{k-(k-k),Xn_{Xn-1 \cdot X1_1}}$$

where $k = n+1$

equations (4).

The load or generator currents for the system are then used by the processor 310 to predict sets of phase and neutral currents that would flow through the distributor 302's conductors (*L1, L2, L3* and N) in each segment if each possible permutation of three phase switch 100 configuration was adopted. However to aid the explanation of the process 920 determination, by way of example and for illustration purposes only, there are three possible restrained three phase switch 100 configurations which are now outlined for systems 300 and 500.

For systems 300 and 500, in the first one of the three possible configurations the first segment terminals 102 is coupled to a first one of the second segment terminals 110. A second one of the first segment terminals 104 is coupled to a second one of the second segment terminals 112 and a third one of the first segment terminals 106 is coupled to a third one of the second segment terminals 114.

For systems 300 and 500, in the second one of the three possible configurations the first one of the first segment terminals 102 is coupled to the second one of the second segment terminals 112. The second one of the first segment terminals 104 is coupled to the third one of the second segment terminals 114 and the third one of the first segment terminals 106 is coupled to the first one of the second segment terminals 110

For systems 300 and 500, in the third one of the three possible configurations the first one of the first segment terminals 102 is coupled to the third one of the second segment terminals 114. The second one of the first segment terminals 104 is coupled to the first one of the second segment terminals 110 and the third one of the first segment terminals 106 is coupled to the second one of the second segment terminals 112.

For distributor systems 400, 600 or 800 with segments 320, 430, 435 and with the three phase switches 100 arranged to provide only the three restrained configurations, the number of permutations of combined three phase switch 100 restrained configurations is 9. In general for radial and interconnected networks, the number of permutations of three phase switch 100 or combined three phase switch 100 configuration for restrained and unrestrained configurations is $3^{n-(t-1)}$ and $6^{n-(t-1)}$ respectively where: $n$ is the number of three phase switches 100 connected to the system; $t$ is the number of transformers connected to the system; and $n \geq t$. Therefore, the number of combined three phase switch 100 configuration possibilities reduces as the number of transformers increases. This reduction in possibilities is caused by the processor 310 algorithm which only considers as allowable the permutations of combined three phase switch 100 configurations that do not result in the crossing of any one transformer's phases with another transformer's phases.

The 920 process determination explanation now continues for system 300. Using system 300 as the example: the load or generator currents that were determined from the relevant set of equations (a) to (c) are used to make sets of phase and neutral current predictions where a set is found for every allowable and unique three phase switch 100 configuration, where for the first one of the restrained configurations the phase and neutral current predictions are calculated as follows:

$$I_{1,1}=I_1+I_4; \quad I_{1,2}=I_2+I_5; \quad I_{1,3}=I_3+I_6; \quad I_{2,1}=I_4; \quad I_{2,2}=I_5; \quad I_{2,3}=I_6;$$

$$I_{N1}=I_{1,1}+I_{1,1}+I_{1,1}; \text{ and } I_{N2}=I_{2,1}+I_{2,2}+I_{2,3} \quad \texttt{equations (d).}$$

For the second one of the restrained configurations the phase and neutral current predictions are calculated as follows:

$$I_{1,1}=I_1+I_5; \quad I_{1,2}=I_2+I_6; \quad I_{1,3}=I_3+I_4; \quad I_{2,1}=I_4; \quad I_{2,2}=I_5; \quad I_{2,3}=I_6;$$

$$I_{N1}=I_{1,1}+I_{1,1}+I_{1,1}; \text{ and } I_{N2}=I_{2,1}+I_{2,2}+I_{2,3} \quad \texttt{equations (e).}$$

For the third one of the restrained configurations the phase and neutral current predictions are calculated as follows:

$$I_{1,1}=I_1+I_6; \quad I_{1,2}=I_2+I_4; \quad I_{1,3}=I_3+I_5; \quad I_{2,1}=I_4; \quad I_{2,2}=I_5; \quad I_{2,3}=I_6;$$

$$I_{N1}=I_{1,1}+I_{1,1}+I_{1,1}; \text{ and } I_{N2}=I_{2,1}+I_{2,2}+I_{2,3} \quad \texttt{equations (f).}$$

Generically for a system 300, the load or generator currents that were determined from equations (2) are used to make sets of phase and neutral current predictions where a set is found for every allowable and unique three phase switch 100 configuration. Phase and neural current predictions are represented using the variable $I^*$ where the leading superscript $*$ denotes that it is a prediction. Hence, each set of currents is calculated with a unique **X1** vector representation by applying the following set of general equations:

$$I^*_{2,1}=I_4; \quad I^*_{2,2}=I_5; \quad I^*_{2,3}=I_6; \quad I^*_{1,1}=I_1+I_{3+XI_1}; \quad I^*_{1,2}=I_2+I_{3+XI_2}; \quad I^*_{1,3}=I_3+I_{3+XI_3};$$

$$I^*_{NI}=I_{1,1}+I_{1,2}+I_{1,3}; \text{ and } I^*_{N2}=I_{2,1}+I_{2,2}+I_{2,3}$$

$$\texttt{equations (5)}$$

For system 500, the load or generator currents that were determined from equations (3) are used to find sets of phase and neutral currents where a set is found for every allowable and unique combined three phase switch 100 configuration. Hence, a set of currents is calculated with a unique combination of **X1** and **X2** vector representations by applying the following set of general equations:

$$I^*_{3,1}=I_7; \quad I^*_{3,2}=I_8; \quad I^*_{3,3}=I_9; \quad I^*_{2,1}=I_4+I_{6+X2_1}; \quad I^*_{2,2}=I_5+I_{6+X2_2};$$

$$I^*_{2,3}=I_6+I_{6+X2_3}; \quad I^*_{1,1}=I_1+I_{3+XI_1}+I_{6+X2_{XI_1}}; \quad I^*_{1,2}=I_2+I_{3+XI_2}+I_{6+X2_{XI_2}};$$

$$I^*_{1,3}=I_3+I_{3+XI_3}+I_{6+X2_{XI_3}}; \quad I^*_{NI}=I_{1,1}+I_{1,2}+I_{1,3};$$

$$I^*_{N2}=I_{2,1}+I_{2,2}+I_{2,3}; \text{ and } I^*_{N3}=I_{3,1}+I_{3,2}+I_{3,3}$$

$$\texttt{equations(6)}$$

For a system with $n$ three phase switches 100, the load or generator currents that were determined from equations (4) are used to find sets of phase and neutral currents where a set is found for every allowable and unique three phase switch 100 configuration. Hence, a set of currents is calculated with a unique combination of **X1**, **X2** ... **Xn** vector representations through the application of the following sets of general equations for phase currents and neutral currents respectively:

$$I^*_{k,1} = I_{3k-2}$$

$$I^*_{k,2} = I_{3k-1}$$

$$I^*_{k,3} = I_{3k}$$

$$I^*_{k-1,1} = I_{3k-5} + I_{3n+X2_1}$$

$$I^*_{k-1,2} = I_{3k-4} + I_{3n+X2_2}$$

$$I^*_{k-1,3} = I_{3k-3} + I_{3n+X2_3}$$

$$I^*_{k-2,1} = I_{3k-8} + I_{3(n-1)+X1_1} + I_{3n+X2_{X1_1}}$$

$$I^*_{k-2,2} = I_{3k-7} + I_{3(n-1)+X1_2} + I_{3n+X2_{X1_2}}$$

$$I^*_{k-2,3} = I_{3k-6} + I_{3(n-1)+X1_3} + I_{3n+X2_{X1_3}}$$

$$\vdots$$

$$I^*_{k-(k-1),1} = I_{3k-(3k-1)} + I_{3+X1_1} + I_{6+X2_{X1_1}} + \ldots + I_{3n+Xn_{Xn-1 \ldots X1_1}}$$

$$I^*_{k-(k-1),2} = I_{3k-(3k-2)} + I_{3+X1_2} + I_{6+X2_{X1_2}} + \ldots + I_{3n+Xn_{Xn-1 \ldots X1_2}}$$

$$I^*_{k-(k-1),3} = I_{3k-(3k-3)} + I_{3+X1_3} + I_{6+X2_{X1_3}} + \ldots + I_{3n+Xn_{Xn-1 \ldots X1_3}}$$

where $k = n+1$

equations (7);

and

$$I^*_{N1} = I_{1,1} + I_{1,2} + I_{1,3}$$

$$I^*_{N2} = I_{2,1} + I_{2,2} + I_{2,3}$$

$$I^*_{N3} = I_{3,1} + I_{3,2} + I_{3,3}$$

$$\vdots$$

$$I^*_{Nn} = I_{n,1} + I_{n,2} + I_{n,3}$$

equations (8)

Each set of phase and neutral currents calculated through the application of equations (5) to (8) are predictions that processor 310 associates with the particular permutation of three phase switch 100 configuration, or combined three phase switch combination, which is defined by the unique set of vector representations that was used to calculate the currents. The determination of current values at a block 920 is then complete.

At a block 930, the sets of phase current predictions associated with each possible permutation of three phase switch 100, or combined three phase switch 100 configuration, are used to calculate *x* combined current values which are respectively associated with the same three phase switch 100, or combined three phase switch 100 configuration as the phase current predictions employed to calculate them. For this calculation, x represents the segment integer which is valid over the range $1 \leq x \leq n+1$ where $n$ is the number of three phase switches 100. The combined current values are then obtained by applying the following formula:

$$\sqrt{(I_{x,1}-I_{x,2})^2}+\sqrt{(I_{x,1}-I_{x,3})^2}+\sqrt{(I_{x,2}-I_{x,3})^2}$$

where $I_{x,1}$, $I_{x,2}$ and $I_{x,3}$ are phase current magnitudes

formula (1).

In an alternative embodiment at a block 930, formula (1) is not used and sets of neutral current magnitudes are found for each of the segments and used instead as the combined current values.

The current analysis continues at a process block 940 where the minimum combined current value is found for the particular segment that the processor 310 has been preconfigured to minimise current within. The three phase switch 100 configuration, or combined three phase switch 100 configuration, to which the minimum combined value is assosiated is then designated by processor 310 as the desired configuration.

At a decision block 950, the desired configuration determined is compared to the selected one of the three phase switch 100, or combined three phase switch 100 configurations, and if they are the same, the method 900 returns to decision block 910. Otherwise, the method 900 progresses to process block 960 and sends a control signal to a three phase switch 100 controller 202 to change its configuration to match that specified by the desired configuration determined at a process block 940. For the case when there is more than one three phase switch 100 installed on the system, processor 310 sends the command signal to change configuration to one three phase switch 100 controller 202, and then waits for confirmation from the controller 202 that the change in configuration was sucessful. Processor 310 does not issue any further change configuration commands until it recieves confirmation of a sucessful change in configuration from the controller 202 to which it sent the last change in configuration command signal. After completion of block 960 the method 900 returns to decision block 910.

The method 900 will now be described when voltage analysis is determined by the processor 310 at a decision block 915. The process at a block 925 for Voltage analysis is identical to the current analysis process defined at a block 920 but it includes an additional voltage determination step that applies Kirchoff's voltage law. Therefore, to avoid repetition only the additional voltage determination step carried out by processor 310 is now described.

A set of phase and neutral current predictions was calculated by applying equations (d) to (f) for a system 500 which covered every allowable three phase switch 100 configuration. Each of these sets of phase and neutral current predictions is used in the voltage determination to find corresponding sets of load or generator voltage values. The additional variables used in the voltage determination are the internal phase and neutral conductor impedances and measured voltage values from the measurement circuitry 506. Using system 500 as the example, for the first one of the restrained configurations, the load or generator voltage predictions are calculated using the results from the corresponding phase and neutral current equations (d) as follows:

$$V_1 = V_{L1} - (I_{1,1} Z_{1,1})- (I_{N,1} Z_{N,1}); \; V_2 = V_{L2} - (I_{1,2} Z_{1,2})- (I_{N,1} Z_{N,1}); \; V_3 = V_{L3} - (I_{1,3} Z_{1,3})-$$

$$(I_{N,1} Z_{N,1}); \; V_4 = V_1 - (I_{2,1} Z_{2,1})- (I_{N,2} Z_{N,2}); \; V_5 = V_2 - (I_{2,2} Z_{2,2})- (I_{N,2} Z_{N,2}); \; \text{and} \; V_6 = V_3 - (I_{2,3} Z_{2,3})- (I_{N,2}$$

$$Z_{N,2}) - \text{equations (g)}.$$

For the second one of the restrained configurations the load or generator voltage predictions are calculated using the results from the corresponding phase and neutral current equations (e) as follows:

$$V_1 = V_{L1} - (I_{1,1} Z_{1,1})-$$

$$(I_{N,1} Z_{N,1}); \; V_2 = V_{L2} - (I_{1,2} Z_{1,2})- (I_{N,1} Z_{N,1}); \; V_3 = V_{L3} - (I_{1,3} Z_{1,3})- (I_{N,1} Z_{N,1}); \; V_5 = V_1 - (I_{2,2} Z_{2,2})- (I_{N,2}$$

$$Z_{N,2}); \; V_6 = V_2 - (I_{2,3} Z_{2,3})- (I_{N,2} Z_{N,2}); \; \text{and} \; V_4 = V_3 - (I_{2,1} Z_{2,1})- (I_{N,2} Z_{N,2}) - \text{equations (h)}.$$

For the third one of the restrained configurations the load or generator voltage predictions are calculated using the results from the corresponding phase and neutral current equations (f) as follows:

$V_1 = V_{L1} - (I_{1,1} Z_{1,1})$-

$(I_{N,1} Z_{N,1}); V_2 = V_{L2} - (I_{1,2} Z_{1,2})$- $(I_{N,1} Z_{N,1}); V_3 = V_{L3} - (I_{1,3} Z_{1,3})$- $(I_{N,1} Z_{N,1}); V_6 = V_1 - (I_{2,3} Z_{2,3})$- $(I_{N,2}$

$Z_{N,2}); V_4 = V_2 - (I_{2,1} Z_{2,1})$- $(I_{N,2} Z_{N,2});$ and $V_5 = V_3 - (I_{2,2} Z_{2,2})$- $(I_{N,2} Z_{N,2})$ - equations (i).

Generically for a system 500, a set of voltages is calculated for every possible unique but allowable **X1** vector representation, by applying the following set of equations:

$$V_1 = V_{L1} - I^*_{1,1} Z_{1,1} - I^*_{N1} Z_{N1}; \quad V_2 = V_{L2} - I^*_{1,2} Z_{1,2} - I^*_{N1} Z_{N1};$$
$$V_3 = V_{L3} - I^*_{1,3} Z_{1,3} - I^*_{N1} Z_{N1}; \quad V_{3+X_1} = V_1 - I^*_{2, XI_1} Z_{2, XI_1} - I^*_{N2} Z_{N2};$$
$$V_{3+X_2} = V_2 - I^*_{2, XI_2} Z_{2, XI_2} - I^*_{N2} Z_{N2}; \text{ and } V_{3+XI_3} = V_3 - I^*_{2, XI_3} Z_{2, XI_3} - I^*_{N2} Z_{N2}$$

equations(9).

The *I** values shown in equation (9) are calculated from equations (5) using the same **X1** vector. Generically for a system 600, a set of voltages is calculated for every possible unique but allowable combination of **X1** and **X2** vector representations, by applying the following set of equations:

$$V_1 = V_{L1} - I^*_{1,1} Z_{1,1} - I^*_{N1} Z_{N1}; \quad V_2 = V_{L2} - I^*_{1,2} Z_{1,2} - I^*_{N1} Z_{N1}; \quad V_3 = V_{L3} - I^*_{1,3} Z_{1,3} - I^*_{N1} Z_{N1};$$
$$V_{3+XI_1} = V_1 - I^*_{2, XI_1} Z_{2, XI_1} - I^*_{N2} Z_{N2}; \quad V_{3+XI_2} = V_2 - I^*_{2, XI_2} Z_{2, XI_2} - I^*_{N2} Z_{N2};$$
$$V_{3+XI_3} = V_3 - I^*_{2, XI_3} Z_{2, XI_3} - I^*_{N2} Z_{N2}; \quad V_{6+X2_1} = V_4 - I^*_{3, X2_1} Z_{3, X2_1} - I^*_{N3} Z_{N3};$$
$$V_{6+X2_2} = V_5 - I^*_{3, X2_2} Z_{3, X2_2} - I^*_{N3} Z_{N3}; \text{ and } V_{6+X2_3} = V_6 - I^*_{3, X2_3} Z_{3, X2_3} - I^*_{N3} Z_{N3}$$

equations(10).

The *I** values shown in equation (10) are calculated from equations (6) using the same combination of **X1** and **X2** vectors.

Generically, for a system with *n* three phase switches 100, each set of voltages is calculated for every possible unique but allowable combination of **X1, X2 ... Xn** vector representations, by applying the following set of general equations:

$$V_1 = V_{L1} - I_{1,1}^* Z_{1,1} - I_{N1}^* Z_{N1}$$

$$V_2 = V_{L2} - I_{1,2}^* Z_{1,2} - I_{N1}^* Z_{N1}$$

$$V_3 = V_{L3} - I_{1,3}^* Z_{1,3} - I_{N1}^* Z_{N1}$$

$$V_{3+X1_1} = V_1 - I_{2,X1_1}^* Z_{2,X1_1} - I_{N2}^* Z_{N2}$$

$$V_{3+X1_2} = V_2 - I_{2,X1_2}^* Z_{2,X1_2} - I_{N2}^* Z_{N2}$$

$$V_{3+X1_3} = V_3 - I_{2,X1_3}^* Z_{2,X1_3} - I_{N2}^* Z_{N2}$$

$$V_{6+X2_1} = V_4 - I_{3,X2_1}^* Z_{3,X2_1} - I_{N3}^* Z_{N3}$$

$$V_{6+X2_2} = V_5 - I_{3,X2_2}^* Z_{3,X2_2} - I_{N3}^* Z_{N3}$$

$$V_{6+X2_3} = V_6 - I_{3,X2_3}^* Z_{3,X2_3} - I_{N3}^* Z_{N3}$$

$$\vdots$$

$$V_{3n+Xn_1} = V_{3n-2} - I_{k,Xn_1}^* Z_{k,Xn_1} - I_{Nk}^* Z_{Nk}$$

$$V_{3n+Xn_2} = V_{3n-1} - I_{k,Xn_2}^* Z_{k,Xn_2} - I_{Nk}^* Z_{Nk}$$

$$V_{3n+Xn_3} = V_{3n} - I_{k,Xn_3}^* Z_{k,Xn_3} - I_{Nk}^* Z_{Nk}$$

$$\text{where } k = n+1$$

$$\text{equations (11).}$$

Also where, the $I^*$ values shown in equation (11) are calculated from equations (7) and (8) using the same combination of **X1**, **X2** ... **Xn** vectors.

Each set of voltage values calculated through the application of equations (9) to (11) are predictions that processor 310 associates with the particular permutation of three phase switch 100 configuration, or combined three phase switch combination, which is defined by the unique set of vector representations that was used to calculate the set of voltage predictions. The determination of voltage values at a block 925 is then complete.

Note that all the current ($I$ and $I^*$), voltage ($V$) and impedance ($Z$) variables detailed herein in equations (2) to (11) are complex numbers.

From equations (2) to (4) it will be apparent that a process block 920 and 925 uses the measuring of phase currents of distributor 302 in a selected one of the three phase switch 100 and combined three phase switch 100 configurations, to inform the determination of load or generator currents. Then, processor 310 is able to predict phase and neutral currents ($I^*$) through the application of the relevant [according to the system] equations from (5) through to (8) for every possible permutation of three phase switch 100 or combined three phase switch 100 configuration, thereby concluding the determination of current values at a block 920. The voltage analysis determination at a block 925 includes the current determination method described for a block 920 and uses the phase and neutral current predictions to predict generator or load voltage values ($V$) for every possible and allowable permutation of three phase switch 100 or combined three phase switch 100 configuration. These voltage predictions are found by processor 310 using determined phase and neutral current values ($I^*$) in conjunction with the: voltages measured between each phase and neutral conductor; and the internal phase and neutral conductor impedances ($Z$) of the distributor 302. The current values and impedance values are then applied to the relevant [according to the system] set of equations from (9) to (11) for every possible permutation of three phase switch 100 or combined three phase switch 100 configuration, thereby concluding the block 925 process.

In an alternative embodiment, at a block 935 voltages are equated to minimum values and at a block 935 the maximum minimum is found.

Next, a process of equating to maximum values is performed at a block 935. At block 935 sets of voltage predictions associated with each possible permutation of three phase switch 100, or combined three phase switch configuration, are equated to a single maximum value. This single maximum value is respectively associated with the same three phase switch 100, or combined three phase switch 100 configuration as the phase current predictions that were employed to calculate them.

Then, at a process block 945 the minimum of the voltage values equated at a process block 935 is found and the three phase switch 100 configuration, or combined three phase switch 100 configuration, to which the minimum combined value is assosiated is then designated by processor 310 as the desired configuration. Then, block 950, and if necessary block 960, are implemented as previously described herein.

In an alternative embodiment, the method 900 can be invoked at a decision block 910 if any voltage value, measured by the voltage measurement devices 506 shown in systems 500 to 800, is below a predetermined value, examples of which include: 216V, 222V and 201V. In this alternative embodiment, the process block 935 equates to minimum values and the process block 945 finds the maximum minimum value. The objective of this alternative embodiment is to aliviate voltage drop induced by loading on a distributor.

From the above description it will be apparent that the method 900 provides for adjusting current imbalance or phase to neutral voltages in a three phase distributor system. The method 900 provides for determining (at blocks 920 to 935) the combined current or maximum voltage values in all segments of the system for every allowable permutation of three phase switch configuration. For a system 300 or 500, a first one of the three restrained configurations is configuration 1 (1 2 3)$^T$, a second one of the three restrained configurations is configuration 2 (2 3 1)$^T$ and a third one of the three restrained configurations is configuration 3 (3 1 2)$^T$. The method 900 then provides (at blocks 940 and 945) for comparing the combined current or maximum voltage values in each of the allowable configurations to determine which of the configurations is desired which has a lowest one of the combined current, or maximum voltage values; and configuring the three phase switch into the desired configuration.

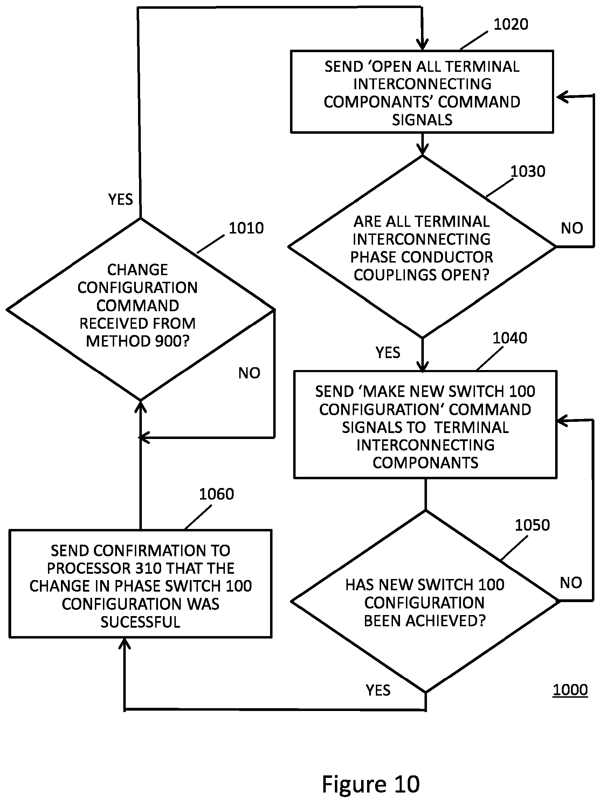

Referring to figure 10, there is a flow chart illustrating a method 1000 which is employed by the controller 202 for controlling terminal interconnecting components, according to an embodiment of the present invention. For illustration purposes only, the method 1000 will now be described as applied to embodiments where switches that are selectively controlled and actuated by command signals comprise the terminal interconnecting components of the three phase switch 100.

On receipt of a change configuration command from processor 310 at process block 960, the controller 202 method 1000 is triggered at a decision block 1010 to proceed to a process block 1020. At a process block 1020 the controller 202 sends the actuation command signals to the terminal interconnecting components to open. At decision block 1030 the controller 202 senses through feedback lines 204 all terminal interconnecting phase conductor couplings to detect if they are open and if they are, it proceeds to a process block 1040. Otherwise, the method 1000 returns to the process block 1020.

At a process block 1040, the controller 202 sends the actuation command signals to the terminal interconnecting components 120 that make the new three phase switch 100 configuration. Then at a decision block 1050, the controller 202 senses all the terminal interconnecting couplings to establish if the new three phase switch 100 configuration has been successfully implemented by the terminal interconnecting components 120 and if it has, the controller 202 proceeds to a process block 1060. Otherwise, the controller 202 returns to a process block 1040.

At a process block 1060 the controller 202 sends confirmation to the processor 310 that the change in three phase switch 100 configuration has been successful and then returns to a decision block 1010.

In an alternative embodiment for systems 300, 400, 500, 600, 700 and 800, the determining process at block 920 and 925 is achieved by physically selecting every possible three phase switch 100 permutation configuration and measuring the current and voltage values for the current and voltage analysis. In this embodiment for current analysis, processor 310 does not predict current values by applying any equations, instead it uses the current measurements from current measurement devices 304 A1 to A3(n+1), where n is the number of three phase switches 100, the processor 310 determines the desired configuration by: combining measurements; or comparing at least two imbalanced measurements to at least two predetermined values or ranges of values stored in a look up table that equates the stored values to specific three phase switch configurations or combined three phase switch configurations when there is more than one three phase switch 100. Also in this embodiment but for voltage analysis, processor 310 does not predict voltage values by applying any equations, instead it uses the voltage measurements from the voltage measurement devices 506 $V_{L1}$, $V_{L2}$, $V_{L3}$, $V_1$, $V_2$ ... $V_{3n}$ where n is the number of three phase switches 100. Otherwise in this embodiment the method 900 is the same as previously described.

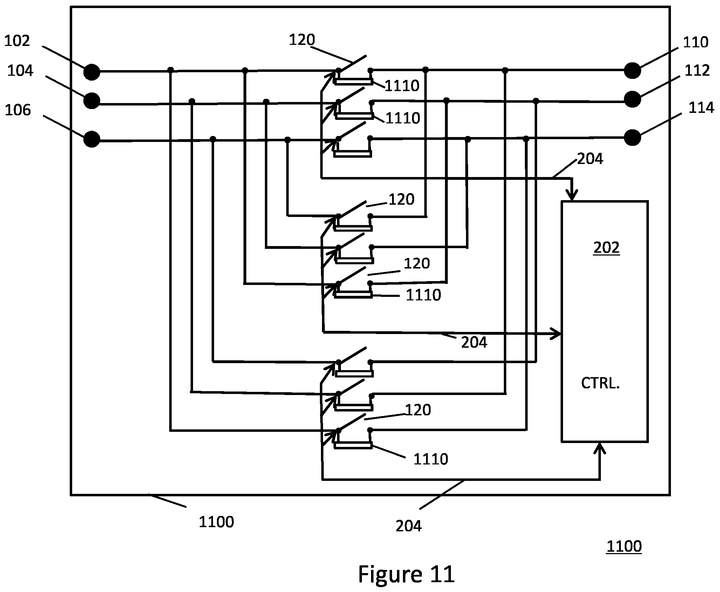

In Figure 11 there is illustrated a schematic circuit diagram of the three phase switch 1100, according to another embodiment of the present invention. In this embodiment the three phase switch 1100 is arranged to provide only the restrained configurations of Figures 1A to 1C. The three phase switch 1100 is similar to the three phase switch 100 of Figure 2 and therefore only the differences will be described. In this embodiment, the terminal interconnecting components 120 are connected in parallel with a respective semiconductor device 1110 which are both selectively controlled and actuated by command signals generated by the controller 202. The semiconductor device 1110 may be a combination of two parallel coupled thyristors arranged to conduct in opposite directions or they may be power transistors.

This three phase switch 1100 can replace the three phase switch 100 in any of the abovementioned systems 300 to 800 and may be extended to include the unrestrained configurations. In operation, for instance, during the configuring at block 960, the configuring of the first three phase switch 1100 into the desired configuration, the controller 202 generates command signals via the control lines 204 to open the switches. Once the switches are open, more current will flow through the semiconductor devices 1110. The controller 202 detects via feedback lines 204 the open state of the switches. Once the open state is detected for all of the switches the controller 202 sends a further signal via the control lines 204 to open circuit the semiconductor devices 1110 (open circuit state). Thereafter the selected switches 120 and corresponding semiconductor devices 820 are closed by controller 202 that generates the required signals via the control lines 204.

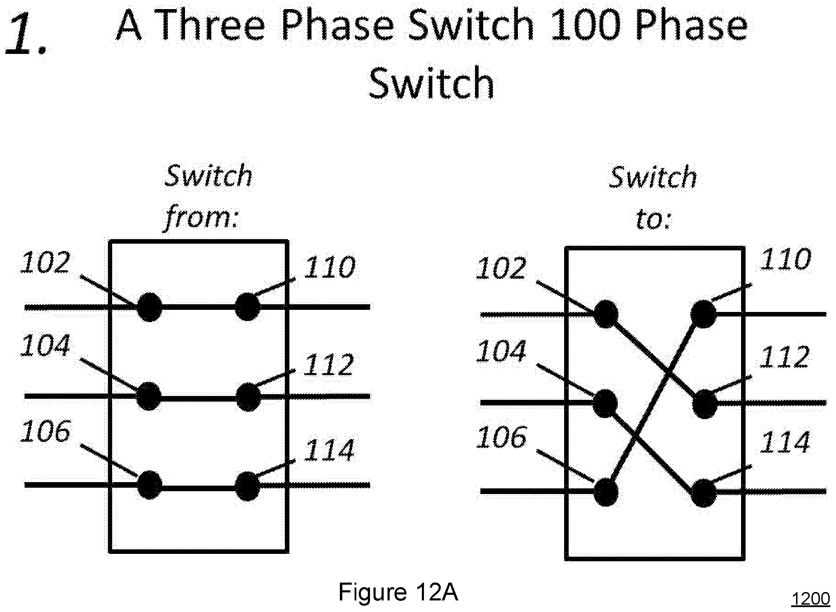

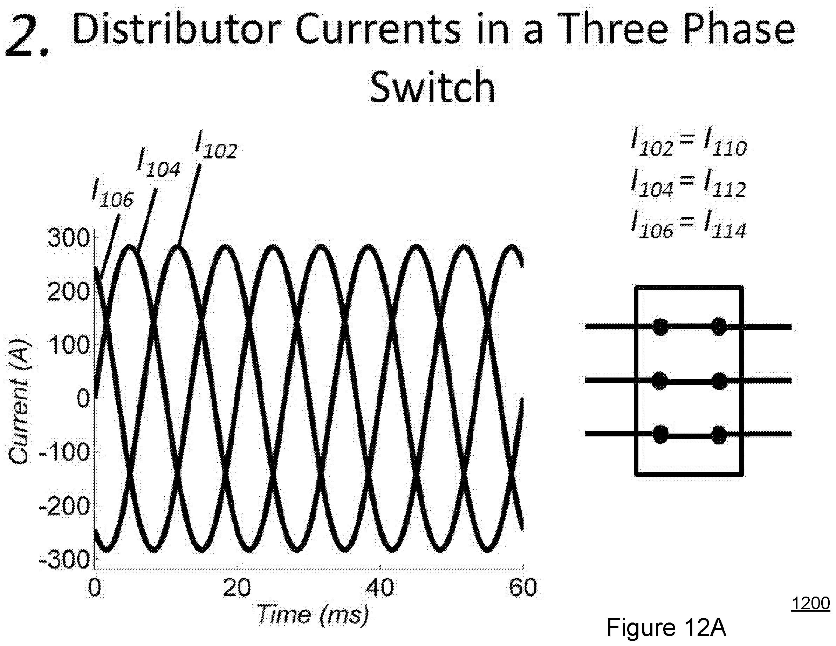

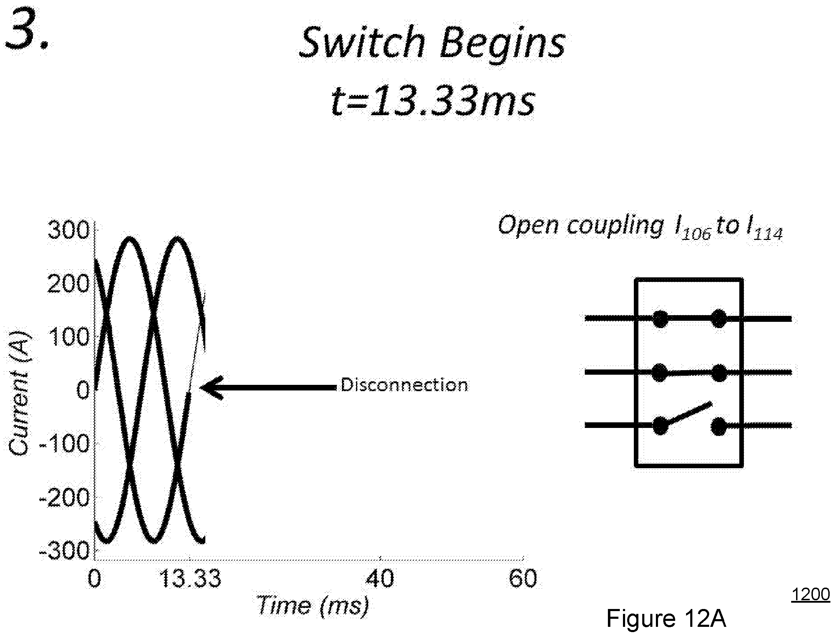

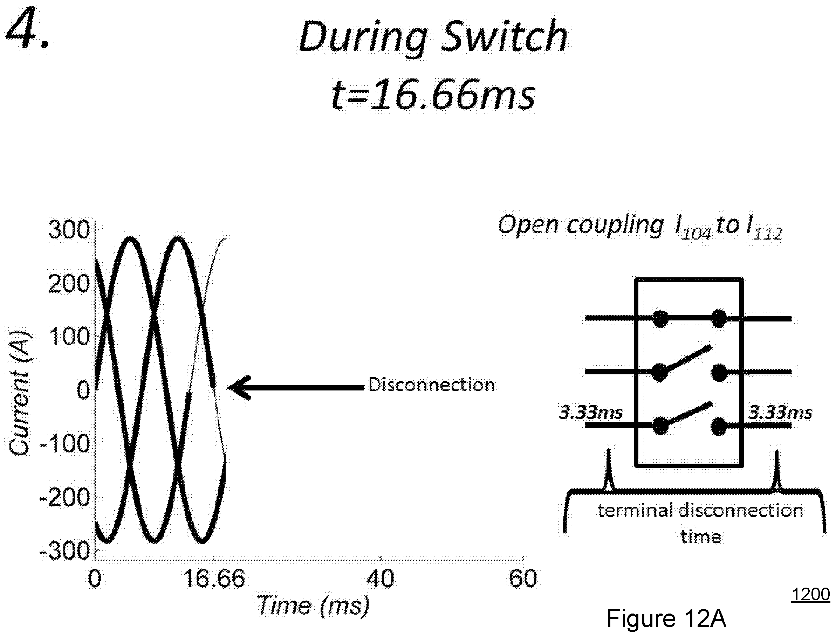

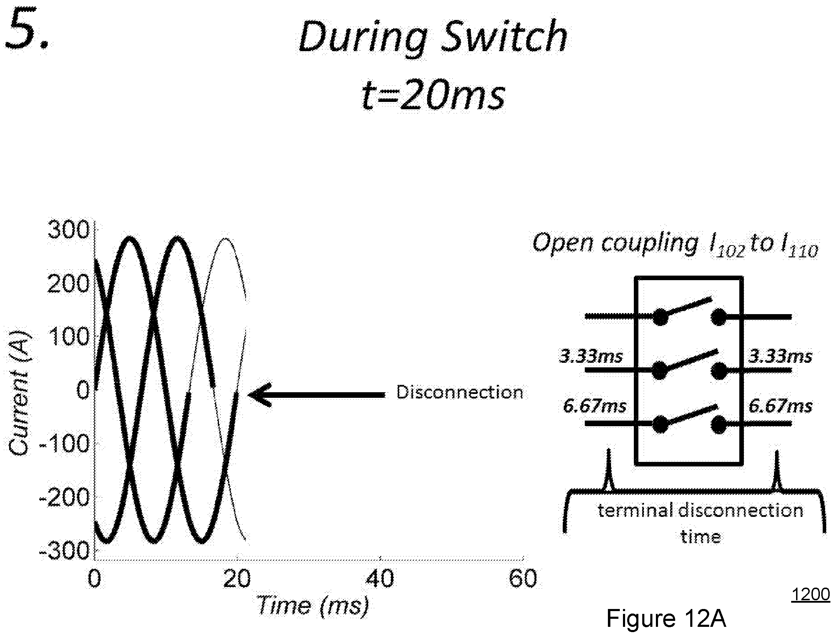

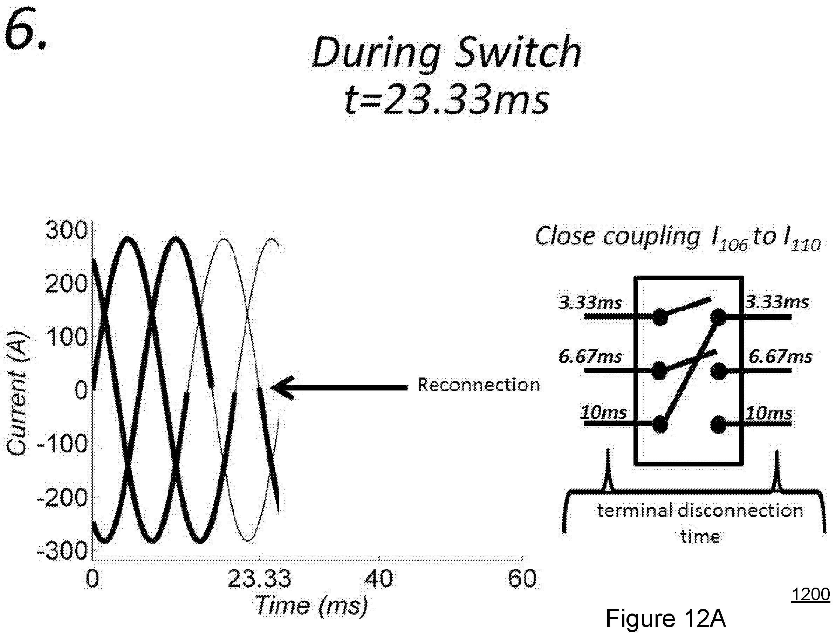

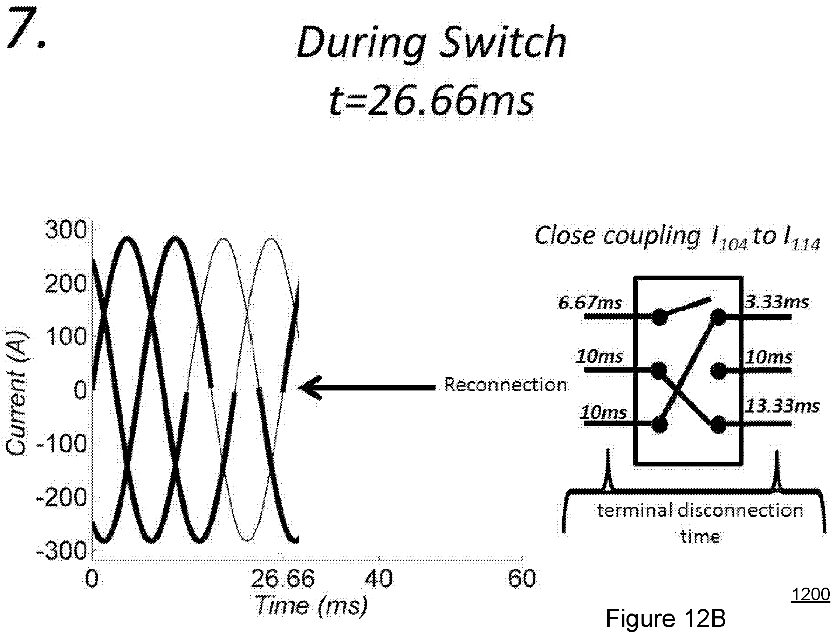

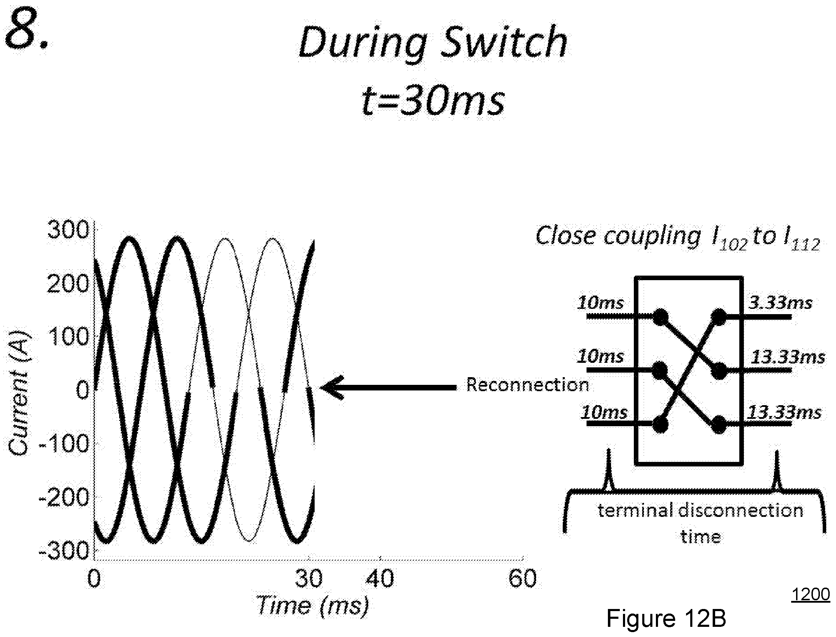

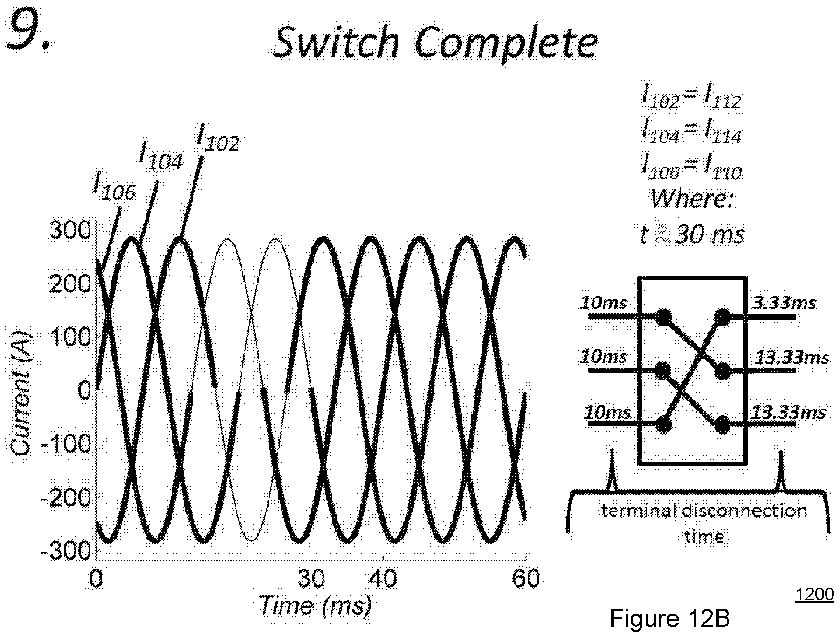

In Figure 12A and Figure 12B there is a sequence of slide schematics that illustrate the device 1100 terminal interconnecting component couplings being controlled by a controller 202 to do a fast switch from the three phase switch configuration of Figure 1A to 1B in a 50Hz electricity distribution network. The terminal interconnecting components shown in the figure represent the six semiconductor devices 1110 that make the three terminal interconnecting couplings of Figure 1A and 1B. The terminal interconnecting components 120 of device 1100 are in the open position throughout the sequence to enable a fast three phase switch which minimises the uncoupling of load and generation either side of the three phase switch 100.

Slide 1 of Figure 12A shows the three phase switch 100 positions that are switched from and to in the sequence. On the left hand side of slide 2, AC distributor current traces are shown which represent the phase currents flowing in the three phase switch 100 shown on the right hand side of the slide. Distributor phase currents constantly change over time and in other embodiments some phase currents are inverted due to current flowing in the opposite direction. This inversion of current is be caused by the loads and generators toggling state between being net generators and net loads to the distributor over time.

The remaining slides 3 to 6 in Figure 12A and slides 7 to 9 in Figure 12B are in chorological order and will now be described in detail. Slide 3 shows terminal 106 and 114 as uncoupled near to or at a zero crossing point which occurs at t = 13.33ms. The use of a zero crossing point for opening a terminal interconnecting component 1110 minimises the stresses placed on the terminal interconnecting component 1110 when transitioning from a closed to an open state. This change in state near to or at the zero crossing point is achieved by controller 202 detecting the zero crossing point by processing measurements provided by the current measurement device 304. The finer traces shown in slides 3 to 9 represent phase currents that are approximately equal to zero. Further disconnections are shown in slides 4 and 5 for the terminal pairs of 104 to 112 and 102 to 110 respectively. A record of the uncoupling time of each terminal from the point of disconnection is shown in slides 4 to 9. Between t = 20ms and t = 23.33ms, the controller 202 automatically processes measurements from a current measurement device 304 to determine that the current is approximately zero for a predefined time period which is less than 3.33ms. In other embodiments this time period can be predefined to any value, for example for 10ms, 5ms or 13s. The determination of approximately zero current by the controller 202 for a predefined period of time allows it to establish that the previous couplings of 106 to 114, 104 to 112 and 102 to 110 are uncoupled at t = 23.33ms enabling it to proceed safely with the fast switch without causing a line to line fault condition. Slide 6 shows t = 23.33ms where the controller 202 has established the open state of the terminal interconnecting components coupling 106 to 114, 104 to 112 and 102 to 110 and the controller 202 sends a signal via control lines 204 to the terminal interconnecting component 1110 to couple terminal 106 to terminal 110 at or near the zero crossing point which controller 202 determines by processing voltage measurements from device 506. Further couplings use the same method and are shown in slides 7 and 8 for the terminal pairs of 104 to 114 and 102 to 112 respectively. Slide 9 shows the resultant configuration up to t = 60ms.

Advantageously the present invention alleviates the problem of imbalances of phase currents or high voltages on distributors that connect loads or generators to the power system. This is achieved at least partially by the processor monitoring and processing the measurements from the system's ammeters and/or voltmeters, and then configuring the three phase switch or switches 100 into the determined desired configuration.

**Claims**

1.  A three phase distributor system, comprising:

    a three phase distributor providing single and/or poly phase loads and/or generators with electrical connections at arbitrary points along the three phase distributor 302;
    measuring circuitry (304) arranged to measure voltage and/or current associated with each phase of the distributor;
    a processor (310) arranged to process measurements provided by the measuring circuitry (304); and
    a three phase switch (100) disposed between ends of the three phase distributor segmenting the three phase distributor into a first segment (320), connected with a load or generator (350), and a second segment (330), connected with a respective load or generator (350), wherein the three phase switch (100) is arranged to connect the first segment (320) and the second segment (330) in series, the three phase switch (100) comprising:

    three first segment (320) terminals (102, 104, 106) ;
    three second segment (330) terminals (110, 112, 114); and

a plurality of terminal interconnecting components (120) arranged to be selectively configured into at least three configurations,

wherein in a first one of the three configurations a first one of the first segment (320) terminals (102, 104, 106) is coupled to a first one of the second segment (330) terminals (110, 112, 114), a second one of the first segment (320) terminals (102, 104, 106) is coupled to a second one of the second segment (330) terminals (110, 112, 114) and a third one of the first segment (320) terminals (102, 104, 106) is coupled to a third one of the second segment (330)terminals (110, 112, 114),
and in a second one of the three configurations the first one of the first segment (320) terminals (102, 104, 106) is coupled to the second one of the second segment (330) terminals (110, 112, 114), the second one of the first segment (320) terminals (102, 104, 106) is coupled to the third one of the second segment (330) terminals (110, 112, 114) and the third one of the first segment (320) terminals (102, 104, 106) is coupled to the first one of the second segment (330) terminals (110, 112, 114),
and in a third one of the three configurations the first one of the first segment (320) terminals (102, 104, 106) is coupled to the third one of the second segment (330) terminals (110, 112, 114), the second one of the first segment (320) terminals (102, 104, 106) is coupled to the first one of the second segment (330) terminals (110, 112, 114) and the third one of the first segment (320) terminals (102, 104, 106) is coupled to the second one of the second segment (330) terminals (110, 112, 114),
thereby segmenting the three phase distributor into the first segment (320) coupled to the first segment (320) terminals (102, 104, 106) and the second segment (330) coupled to the second segment (330) terminals (110, 112, 114),
wherein the measuring circuitry (304) comprises first segment (320) measuring circuitry (304) arranged to measure one or more of voltage, current of each phase of the first segment (320) and neutral current.

2. The three phase distributor system as claimed in claim 1, wherein the measuring circuitry (304) comprises second segment (330) measuring circuitry (304) arranged to measure one or both of voltage and current of each phase of the second segment (330) adjacent the second segment (330) terminals (110, 112, 114) of the three phase switch (100) or the first segment (320) terminals (102, 104, 106) of the three phase switch (100).

3. The three phase distributor system as claimed in claim 1 or 2, wherein one or more of:

measurements provided by the first or second segment (330) measuring circuitry (304) are combined by the processor (310) as combined measurements and are compared to other combined measurements measured in different three phase switch (100) configurations or combined three phase switch (100) configurations, to determine which of the three phase switch (100) configurations or combined three phase switch (100) configurations is a desired configuration which has a lowest one of the maximum voltage values or combined current or neutral current values; or the highest one of the minimum voltage values; and
imbalanced measurements provided by the first or second segment (330) measuring circuitry (304) are compared by the processor (310) with one or more stored values, to determine which of the three phase switch (100) configurations or combined three phase switch (100) configurations is the desired configuration; and
neutral current values measured by measuring circuitry (304) in the first or second segment (330) are compared to other neutral current values measured in different three phase switch (100) configurations or combined three phase switch (100) configurations, to determine which of the three phase switch configurations or combined three phase switch (100) configurations is the desired configuration.

4. The three phase distributor system as claimed in claim 1 or 2 wherein one or both of:

the terminal interconnecting components (120) comprise one or more of switches, electro-mechanical breakers, thyristors, transistors or power electronic devices; and
at least some of the terminal interconnecting components (120) comprise mechanical switches each in parallel with a respective semiconductor device.

5. The three phase distributor system as claimed in any preceding claim wherein:

the processor (310) is arranged to communicate with a controller (202); and
the controller is coupled to the terminal interconnecting components (120) and is arranged to selectively control the terminal interconnecting components (120) into the at least three configurations.

6. The three phase distributor system as claimed in claim 4 or 5, wherein the controller is arranged to selectively control the terminal interconnecting components (120) by:

sending actuation command signals to the terminal interconnecting components (120) to open;
processing signals indicative of the terminal interconnecting components (120) open and closed status to determine that the terminal interconnecting components (120) are open; and
sending, when it is determined that the terminal interconnecting components (120) are open, an actuation command signal to the terminal interconnecting components (120) to close to provide one of the at least three configurations.

7. The three phase distributor system, as claimed in any preceding claim, arranged to be selectively configured into three unrestrained configurations thereby allowing switching of phase rotations,
wherein in a first one of the unrestrained configurations the first one of the first segment (320) terminals (102, 104, 106) is coupled to the second one of the second segment (330) terminals (110, 112, 114). The second one of the first segment (320) terminals (102, 104, 106) is coupled to the first one of the second segment (330) terminals (110, 112, 114) and the third one of the first segment (320) terminals (102, 104, 106) is coupled to the third one of the second segment (330) terminals (110, 112, 114),
and in a second one of the unrestrained configurations the first one of the first segment (320) terminals (102, 104, 106) is coupled to the third one of the second segment (330) terminals (110, 112, 114). The second one of the first segment (320) terminals (102, 104, 106) is coupled to the second one of the second segment (330) terminals (110, 112, 114) and the third one of the first segment (320) terminals (102, 104, 106) is coupled to the first one of the second segment (330) terminals (110, 112, 114),
and in a third one of the unrestrained configurations the first one of the first segment (320) terminals (102, 104, 106) is coupled to the first one of the second segment (330) terminals (102, 104, 106), the second one of the first segment (320) terminals (102, 104, 106) is coupled to the third one of the second segment (330) terminals (110, 112, 114) and the third one of the first segment (320) terminals (102, 104, 106) is coupled to the second one of the second segment (330) terminals (110, 112, 114).

8. The three phase distributor system as claimed in any preceding claim, comprising a second three phase switch (100) disposed between ends of the second segment (330), thereby segmenting the second segment (330) into a second segment (430) and a third segment (435), connected with a respective load or generator(350), wherein the second three phase switch (100) connects the second segment (430) and the third segment (435) in series.

9. The three phase distributor system as claimed in claim 5 or any claim dependent thereon, wherein:
the controller is arranged not to change a configuration of the terminal interconnecting components (120) when a measurement from at least the first or second segment measuring circuitry (304, 506) is below a predetermined value.

10. The Three phase distributor system as claimed in claim 4 or 5 or any claim dependent thereon, wherein the controller is arranged to minimise the uncoupling of load and generation either side of the three phase switch (100) by starting to selectively control terminal interconnecting components (120) to change from the selected one of the at least three configurations to a different one of the least three configurations by:

sending an actuation command signal to a closed terminal interconnecting component to open;
processing a signal indicative of the terminal interconnecting component's status to determine that the terminal interconnecting component is open, thereby establishing that a terminal has successfully been uncoupled from the distribution network; and
sending, when it is established that a terminal has been uncoupled from the distribution network, an actuation command signal to another terminal interconnecting component to close in order to couple said uncoupled terminal to the distribution network and provide a first of three couplings of the different one of the at least three configurations.

11. A method of adjusting current imbalance or phase to neutral voltages in a three phase distributor system comprising a three phase distributor providing single and/or poly phase loads and/or generators with electrical connections at arbitrary points along the three phase distributor (302) and at least one three phase switch (100) segmenting the three phrases distributor into a first segment (320) and a second segment (330) having first segment (320) terminals (102, 104, 106) and second segment (330) terminals (110, 112, 114), the at least one three phase switch (100) including a first three phase switch (100) disposed between ends of the three phase distributor thereby segmenting the three phase distributor into a first segment (320), connected with a load or generator (350), attached to the first segment (320) terminals (102, 104, 106) and a second segment (330), connected with a respective load or generator (350), attached to the second segment (330) terminals (110, 112, 114), wherein the first three phase switch (100) connects the first segment (320) and the second segment (330) in series, the method comprising:

determining maximum voltage or minimum voltage or combined current values or neutral current in at least one segment for every allowable permutation of three phase switch (100) configuration, wherein

in a first one of the three configurations, a first one of the first segment (320) terminals (102, 104, 106) is coupled to a first one of the second segment (330) terminals (110, 112, 114), a second one of the first segment (320) terminals (102, 104, 106) is coupled to a second one of the second segment (330) terminals (110, 112, 114) and a third one of the first segment (320) terminals (102, 104, 106) is coupled to a third one of the second segment (330) terminals (110, 112, 114),

and in a second one of the configurations the first one of the first segment (320) terminals (102, 104, 106) is coupled to the second one of the second segment (330) terminals (110, 112, 114), the second one of the first segment (320) terminals (102, 104, 106) is coupled to the third one of the second segment (330) terminals (110, 112, 114) and the third one of the first segment (320) terminals (102, 104, 106) is coupled to the first one of the second segment (330) terminals (110, 112, 114),

and in a third one of the configurations the first one of the first segment (320) terminals (102, 104, 106) is coupled to the third one of the second segment (330) terminals (110, 112, 114), the second one of the first segment (320) terminals (102, 104, 106) is coupled to the first one of the second segment (330) terminals (110, 112, 114) and the third one of the first segment (320) terminals (102, 104, 106) is coupled to the second one of the second segment (330) terminals (110, 112, 114);

comparing the combined current, neutral current, maximum voltage or minimum voltage values in at least one segment of the system in each of the allowable configurations to determine which of the configurations is a desired configuration which has a lowest one of the maximum voltage values or combined current or neutral current values; or the highest one of the minimum voltage values; and configuring the three phase switch (100) into the desired configuration.

12. The method as claimed in claim 11, wherein the determining is **characterised by** one or both of:

measuring voltage and/or current values for each phase when the three phase switch (100) is in a selected one of the configurations; and
calculating the current or phase to neutral voltage values for each phase for the non-selected configurations using the results of the measuring; or
wherein the determining is **characterised by**:

measuring current or phase to neutral voltage values for each phase when the three phase switch (100) is in a selected one of the configurations;
switching to each of the other configurations; and
measuring voltage and/or current values for each phase for each of the other configurations;
optionally the measuring is **characterised by** measuring at least one current value in the neutral conductor.

13. The method as claimed in claim 11 or 12, wherein the at least one three phase switch (100) includes a second three phase switch (100) disposed between ends of the second segment (330) thereby segmenting the second segment (330) into a second segment (430) and a third segment (435), connected with a respective load or generator (350), wherein the second three phase switch (100) connects the second segment (430) and the third segment (435) in series, wherein the determining comprises determining the combined current or neutral current values in at least one segment, maximum voltage values or minimum voltage values for all permutations of the first three phase switch (100) combined with the configurations of the second three phase switch (100) .

14. The method as claimed in any one of claims 11 to 13, wherein one of:

the method is invoked at fixed times each day;
the method is invoked at pre-determined time intervals; or
the method is invoked due to a voltage measurement exceeding a predetermined value.

15. The method as claimed in any one of claims 11 to 14, wherein prior to the configuring the method includes a step of opening all couplings between the first segment (320) terminals (102, 104, 106) and second segment (330) terminals (110, 112, 114) and then performing the process of configuring; optionally the three phase switch (100) comprises switches each in parallel with a respective semiconductor device, and wherein the step of opening comprises:

opening the switches;
detecting that the switches are open; and
controlling the semiconductor devices to an open circuit state.

**Patentansprüche**

1.  Dreiphasiges Verteilersystem, umfassend:

einen dreiphasigen Verteiler, der einzel- und/oder polyphasige Lasten und/oder Generatoren mit elektrischen Verbindungen an willkürlichen Punkten entlang des dreiphasigen Verteilers 302 bereitstellt;
Messschaltung (304), die angeordnet ist, um Spannung und/oder Strom in Verbindung mit jeder Phase des Verteilers zu messen;
einen Prozessor (310), der angeordnet ist, um Messungen zu verarbeiten, die durch die Messschaltung (304) bereitgestellt werden; und
einen dreiphasigen Schalter (100), der zwischen Enden des dreiphasigen Verteilers vorgesehen ist und den dreiphasigen Verteiler in ein erstes Segment (320), das mit einer Last oder einem Generator (350) verbunden ist, und ein zweites Segment (330) segmentiert, das mit einer jeweiligen Last oder einem jeweiligen Generator (350) verbunden ist, wobei der dreiphasige Schalter (100) angeordnet ist, um das erste Segment (320) und das zweite Segment (330) in Reihe zu verbinden, wobei der dreiphasige Schalter (100) Folgendes umfasst:

drei Anschlüsse (102, 104, 106) des ersten Segments (320);
drei Anschlüsse (110, 112, 114) des zweiten Segments (330); und
eine Vielzahl von Anschlussverbindungskomponenten (120), die angeordnet sind, um selektiv in zumindest drei Konfigurationen konfiguriert zu werden,

wobei in einer ersten der drei Konfigurationen ein erster der Anschlüsse (102, 104, 106) des ersten Segments (320) an einen ersten der Anschlüsse (110, 112, 114) des zweiten Segments (330) gekoppelt ist, ein zweiter der Anschlüsse (102, 104, 106) des ersten Segments (320) an einen zweiten der Anschlüsse (110, 112, 114) des zweiten Segments (330) gekoppelt ist und ein dritter der Anschlüsse (102, 104, 106) des ersten Segments (320) an einen dritten der Anschlüsse (110, 112, 114) des zweiten Segments (330) gekoppelt ist,
und in einer zweiten der drei Konfigurationen der erste der Anschlüsse (102, 104, 106) des ersten Segments (320) an den zweiten der Anschlüsse (110, 112, 114) des zweiten Segments (330) gekoppelt ist, der zweite der Anschlüsse (102, 104, 106) des ersten Segments (320) an den dritten der Anschlüsse (110, 112, 114) des zweiten Segments (330) gekoppelt ist und der dritte der Anschlüsse (102, 104, 106) des ersten Segments (320) an den ersten der Anschlüsse (110, 112, 114) des zweiten Segments (330) gekoppelt ist,
und in einer dritten der drei Konfigurationen der erste der Anschlüsse (102, 104, 106) des ersten Segments (320) an den dritten der Anschlüsse (110, 112, 114) des zweiten Segments (330) gekoppelt ist, der zweite der Anschlüsse (102, 104, 106) des ersten Segments (320) an den ersten der Anschlüsse (110, 112, 114) des zweiten Segments (330) gekoppelt ist und der dritte der Anschlüsse (102, 104, 106) des ersten Segments (320) an den zweiten der Anschlüsse (110, 112, 114) des zweiten Segments (330) gekoppelt ist,
wodurch der dreiphasige Verteiler in das erste Segment (320) gekoppelt an die Anschlüsse (102, 104, 106) des ersten Segments (320) und das zweite Segment (330) gekoppelt an die Anschlüsse (110, 112, 114) des zweiten Segments (330) segmentiert wird,
wobei die Messschaltung (304) Messschaltung (304) des ersten Segments (320) umfasst, die angeordnet ist, um eines oder mehrere von Spannung, Strom jeder Phase des ersten Segments (320) und Nullleiterstrom zu messen.

2.  Dreiphasiges Verteilersystem nach Anspruch 1, wobei die Messschaltung (304) Messschaltung (304) des zweiten Segments (330) umfasst, die angeordnet ist, um eines oder beides von Spannung und Strom jeder Phase des zweiten Segments (330) benachbart zu den Anschlüssen (110, 112, 114) des zweiten Segments (330) des dreiphasigen Schalters (100) oder den Anschlüssen (102, 104, 106) des ersten Segments (320) des dreiphasigen Schalters (100) zu messen.

3.  Dreiphasiges Verteilersystem nach Anspruch 1 oder 2, wobei eines oder mehrere des Folgenden gelten:

Messungen, die durch die Messschaltung (304) des ersten oder des zweiten Segments (330) bereitgestellt werden, werden durch den Prozessor (310) als kombinierte Messungen kombiniert und werden mit anderen kombinierten Messungen verglichen, die in unterschiedlichen Konfigurationen des dreiphasigen Schalters (100) oder kombinierten Konfigurationen des dreiphasigen Schalters (100) gemessen werden, um zu bestimmen, welche der Konfigurationen des dreiphasigen Schalters (100) oder der kombinierten Konfigurationen des dreiphasigen Schalters (100) eine gewünschte Konfiguration ist, die einen niedrigsten der Höchstspannungswerte oder kombinierten Strom- oder Nullleiterstromwerte oder den höchsten der Mindestspannungswerte aufweist; und

unausgeglichene Messungen, die durch die Messschaltung (304) des ersten oder des zweiten Segments (330) bereitgestellt werden, werden durch den Prozessor (310) mit einem oder mehreren gespeicherten Werten verglichen, um zu bestimmen, welche der Konfigurationen des dreiphasigen Schalters (100) oder der kombinierten Konfigurationen des dreiphasigen Schalters (100) die gewünschte Konfiguration ist; und Nullleiterstromwerte, die durch Messschaltung (304) in dem ersten oder dem zweiten Segment (330) gemessen werden, werden mit anderen Nullleiterstromwerten verglichen, die in unterschiedlichen Konfigurationen des dreiphasigen Schalters (100) oder kombinierten Konfigurationen des dreiphasigen Schalters (100) gemessen werden, um zu bestimmen, welche der Konfigurationen des dreiphasigen Schalters oder kombinierten Konfigurationen des dreiphasigen Schalters (100) die gewünschte Konfiguration ist.

4. Dreiphasiges Verteilersystem nach Anspruch 1 oder 2, wobei eines oder beides des Folgenden gilt:

die Anschlussverbindungskomponenten (120) umfassen eines oder mehrere von Schaltern, elektromechanischen Schutzschaltern, Thyristoren, Transistoren oder Leistungselektronikvorrichtungen; und zumindest einige der Anschlussverbindungskomponenten (120) umfassen mechanische Schalter jeweils parallel zu einer jeweiligen Halbleitervorrichtung.

5. Dreiphasiges Verteilersystem nach einem vorhergehenden Anspruch, wobei:

der Prozessor (310) angeordnet ist, um mit einer Steuerung (202) zu kommunizieren; und die Steuerung an die Anschlussverbindungskomponenten (120) gekoppelt ist und angeordnet ist, um die Anschlussverbindungskomponenten (120) selektiv in die zumindest drei Konfigurationen zu steuern.

6. Dreiphasiges Verteilersystem nach Anspruch 4 oder 5, wobei die Steuerung angeordnet ist, um die Anschlussverbindungskomponenten (120) durch Folgendes selektiv zu steuern:

Senden von Betätigungsbefehlssignalen an die Anschlussverbindungskomponenten (120), um sich zu öffnen; Verarbeiten von Signalen, die den offenen und geschlossenen Status der Anschlussverbindungskomponenten (120) angeben, um zu bestimmen, dass die Anschlussverbindungskomponenten (120) offen sind; und Senden, wenn bestimmt wird, dass die Anschlussverbindungskomponenten (120) offen sind, eines Betätigungsbefehlssignals an die Anschlussverbindungskomponenten (120), um sich zu schließen, um eine der zumindest drei Konfigurationen bereitzustellen.

7. Dreiphasiges Verteilersystem nach einem vorhergehenden Anspruch, das angeordnet ist, um selektiv in drei uneingeschränkte Konfigurationen konfiguriert zu werden, wodurch Schalten von Phasenrotationen ermöglicht wird, wobei in einer ersten der uneingeschränkten Konfigurationen der erste der Anschlüsse (102, 104, 106) des ersten Segments (320) an den zweiten der Anschlüsse (110, 112, 114) des zweiten Segments (330) gekoppelt ist, der zweite der Anschlüsse (102, 104, 106) des ersten Segments (320) an den ersten der Anschlüsse (110, 112, 114) des zweiten Segments (330) gekoppelt ist und der dritte der Anschlüsse (102, 104, 106) des ersten Segments (320) an den dritten der Anschlüsse (110, 112, 114) des zweiten Segments (330) gekoppelt ist, und in einer zweiten der uneingeschränkten Konfigurationen der erste der Anschlüsse (102, 104, 106) des ersten Segments (320) an den dritten der Anschlüsse (110, 112, 114) des zweiten Segments (330) gekoppelt ist, der zweite der Anschlüsse (102, 104, 106) des ersten Segments (320) an den zweiten der Anschlüsse (110, 112, 114) des zweiten Segments (330) gekoppelt ist und der dritte der Anschlüsse (102, 104, 106) des ersten Segments (320) an den ersten der Anschlüsse (110, 112, 114) des zweiten Segments (330) gekoppelt ist, und in einer dritten der uneingeschränkten Konfigurationen der erste der Anschlüsse (102, 104, 106) des ersten Segments (320) an den ersten der Anschlüsse (102, 104, 106) des zweiten Segments (330) gekoppelt ist, der zweite der Anschlüsse (102, 104, 106) des ersten Segments (320) an den dritten der Anschlüsse (110, 112, 114) des zweiten Segments (330) gekoppelt ist und der dritte der Anschlüsse (102, 104, 106) des ersten Segments (320) an den zweiten der Anschlüsse (110, 112, 114) des zweiten Segments (330) gekoppelt ist.

8. Dreiphasiges Verteilersystem nach einem vorhergehenden Anspruch, umfassend einen zweiten dreiphasigen Schalter (100), der zwischen Enden des zweiten Segments (330) vorgesehen ist, wodurch das zweite Segment (330) in ein zweites Segment (430) und ein drittes Segment (435) segmentiert wird, verbunden mit einer jeweiligen Last oder einem jeweiligen Generator (350), wobei der zweite dreiphasige Schalter (100) das zweite Segment (430) und das dritte Segment (435) in Reihe verbindet.

9. Dreiphasiges Verteilersystem nach Anspruch 5 oder einem davon abhängigen Anspruch, wobei:
die Steuerung angeordnet ist, um eine Konfiguration der Anschlussverbindungskomponenten (120) nicht zu ändern, wenn eine Messung von zumindest der Messschaltung (304, 506) des ersten oder des zweiten Segments unter einem vorbestimmten Wert liegt.

10. Dreiphasiges Verteilersystem nach Anspruch 4 oder 5 oder einem davon abhängigen Anspruch, wobei die Steuerung angeordnet ist, um das Entkoppeln von Last und Erzeugung auf beiden Seiten des dreiphasigen Schalters (100) zu minimieren, indem damit gestartet wird, Anschlussverbindungskomponenten (120) selektiv zu steuern, um sich von der ausgewählten der zumindest drei Konfigurationen in eine andere der zumindest drei Konfigurationen zu ändern, durch:

Senden eines Betätigungsbefehlssignals an eine geschlossene Anschlussverbindungskomponente, um sich zu öffnen;
Verarbeiten eines Signals, das den Status der Anschlussverbindungskomponente angibt, um zu bestimmen, dass die Anschlussverbindungskomponente offen ist, wodurch festgestellt wird, dass ein Anschluss erfolgreich von dem Verteilungsnetzwerk entkoppelt worden ist; und
Senden, wenn festgestellt wird, dass ein Anschluss von dem Verteilungsnetzwerk entkoppelt worden ist, eines Betätigungsbefehlssignals an eine andere Anschlussverbindungskomponente, um sich zu schließen, um den entkoppelten Anschluss an das Verteilungsnetzwerk zu koppeln und eine erste von drei Kopplungen der anderen von den zumindest drei Konfigurationen bereitzustellen.

11. Verfahren zum Anpassen von Stromungleichgewicht oder Phase an Nullleiterspannungen in einem dreiphasigen Verteilersystem, das einen dreiphasigen Verteiler, der einzel- und/oder polyphasige Lasten und/oder Generatoren mit elektrischen Verbindungen an willkürlichen Punkten entlang des dreiphasigen Verteilers (302) bereitstellt, und zumindest einen dreiphasigen Schalter (100) umfasst, der den dreiphasigen Verteiler in ein erstes Segment (320) und ein zweites Segment (330) segmentiert, das Anschlüsse (102, 104, 106) des ersten Segments (320) und Anschlüsse (110, 112, 114) des zweiten Segments (330) aufweist, wobei der zumindest eine dreiphasige Schalter (100) einen ersten dreiphasigen Schalter (100) beinhaltet, der zwischen Enden des dreiphasigen Verteilers vorgesehen ist, wodurch der dreiphasige Verteiler in ein erstes Segment (320), verbunden mit einer Last oder einem Generator (350), angebracht an den Anschlüssen (102, 104, 106) des ersten Segments (320), und ein zweites Segment (330) segmentiert wird, verbunden mit einer jeweiligen Last oder einem jeweiligen Generator (350), angebracht an den Anschlüssen (110, 112, 114) des zweiten Segments (330), wobei der erste dreiphasige Schalter (100) das erste Segment (320) und das zweite Segment (330) in Reihe verbindet, wobei das Verfahren Folgendes umfasst:

Bestimmen von Höchstspannung oder Mindestspannung oder kombinierten Stromwerten oder Nullleiterstrom in zumindest einem Segment für jede zulässige Permutation der Konfiguration des dreiphasigen Schalters (100), wobei
in einer ersten der drei Konfigurationen ein erster der Anschlüsse (102, 104, 106) des ersten Segments (320) an einen ersten der Anschlüsse (110, 112, 114) des zweiten Segments (330) gekoppelt ist, ein zweiter der Anschlüsse (102, 104, 106) des ersten Segments (320) an einen zweiten der Anschlüsse (110, 112, 114) des zweiten Segments (330) gekoppelt ist und ein dritter der Anschlüsse (102, 104, 106) des ersten Segments (320) an einen dritten der Anschlüsse (110, 112, 114) des zweiten Segments (330) gekoppelt ist,
und in einer zweiten der Konfigurationen der erste der Anschlüsse (102, 104, 106) des ersten Segments (320) an den zweiten der Anschlüsse (110, 112, 114) des zweiten Segments (330) gekoppelt ist, der zweite der Anschlüsse (102, 104, 106) des ersten Segments (320) an den dritten der Anschlüsse (110, 112, 114) des zweiten Segments (330) gekoppelt ist und der dritte der Anschlüsse (102, 104, 106) des ersten Segments (320) an den ersten der Anschlüsse (110, 112, 114) des zweiten Segments (330) gekoppelt ist,
und in einer dritten der Konfigurationen der erste der Anschlüsse (102, 104, 106) des ersten Segments (320) an den dritten der Anschlüsse (110, 112, 114) des zweiten Segments (330) gekoppelt ist, der zweite der Anschlüsse (102, 104, 106) des ersten Segments (320) an den ersten der Anschlüsse (110, 112, 114) des zweiten Segments (330) gekoppelt ist und der dritte der Anschlüsse (102, 104, 106) des ersten Segments (320) an den zweiten der Anschlüsse (110, 112, 114) des zweiten Segments (330) gekoppelt ist;
Vergleichen der Werte des kombinierten Stroms, des Nullleiterstroms, der Höchstspannung oder der Mindestspannung in zumindest einem Segment des Systems in jeder der zulässigen Konfigurationen, um zu bestimmen, welche der Konfigurationen eine gewünschte Konfiguration ist, die einen niedrigsten der Höchstspannungswerte oder der kombinierten Strom- oder der Nullleiterstromwerte; oder den höchsten der Mindestspannungswerte aufweist; und Konfigurieren des dreiphasigen Schalters (100) in die gewünschte Konfiguration.

**12.** Verfahren nach Anspruch 11, wobei das Bestimmen durch eines oder beides des Folgenden gekennzeichnet ist:

Messen von Spannungs- und/oder Stromwerten für jede Phase, wenn der dreiphasige Schalter (100) in einer ausgewählten der Konfigurationen ist; und
Berechnen des Stroms oder der Phase zu Nullleiterspannungswerten für jede Phase für die nicht ausgewählten Konfigurationen unter Verwendung der Ergebnisse der Messung; oder
wobei das Bestimmen durch Folgendes gekennzeichnet ist:

Messen von Strom oder Phase zu Nullleiterspannungswerten für jede Phase, wenn der dreiphasige Schalter (100) in einer ausgewählten der Konfigurationen ist;
Schalten in jede der anderen Konfigurationen; und
Messen von Spannungs- und/oder Stromwerten für jede Phase für jede der anderen Konfigurationen;
wobei optional das Messen durch Messen von zumindest einem Stromwert in dem Nullleiter gekennzeichnet ist.

**13.** Verfahren nach Anspruch 11 oder 12, wobei der zumindest eine dreiphasige Schalter (100) einen zweiten dreiphasigen Schalter (100) beinhaltet, der zwischen Enden des zweiten Segments (330) vorgesehen ist, wodurch das zweite Segment (330) in ein zweites Segment (430) und ein drittes Segment (435) segmentiert wird, das mit einer jeweiligen Last oder einem jeweiligen Generator (350) verbunden ist, wobei der zweite dreiphasige Schalter (100) das zweite Segment (430) und das dritte Segment (435) in Reihe verbindet, wobei das Bestimmen das Bestimmen der kombinierten Strom- oder Nullleiterstromwerte in zumindest einem Segment, der Höchstspannungswerte oder Mindestspannungswerte für alle Permutationen des ersten dreiphasigen Schalters (100) kombiniert mit den Konfigurationen des zweiten dreiphasigen Schalters (100) umfasst.

**14.** Verfahren nach einem der Ansprüche 11 bis 13, wobei eines des Folgenden gilt:

das Verfahren wird zu festen Zeiten jeden Tag aufgerufen;
das Verfahren wird in vorbestimmten Zeitintervallen aufgerufen; oder
das Verfahren wird aufgrund einer Spannungsmessung aufgerufen, die einen vorbestimmten Wert überschreitet.

**15.** Verfahren nach einem der Ansprüche 11 bis 14, wobei vor dem Konfigurieren das Verfahren einen Schritt des Öffnens aller Kopplungen zwischen den Anschlüssen (102, 104, 106) des ersten Segments (320) und den Anschlüssen (110, 112, 114) des zweiten Segments (330) und dann das Durchführen des Prozesses des Konfigurierens beinhaltet; wobei optional der dreiphasige Schalter (100) Schalter jeweils parallel zu einer jeweiligen Halbleitervorrichtung umfasst, und wobei der Schritt des Öffnens Folgendes umfasst:

Öffnen der Schalter;
Erfassen, dass die Schalter offen sind; und
Steuern der Halbleitervorrichtungen in einen offenen Schaltungszustand.

## Revendications

**1.** Système distributeur triphasé, comprenant :

un distributeur triphasé fournissant des charges et/ou des générateurs monophasés et/ou polyphasés avec des connexions électriques au niveau de points arbitraires le long du distributeur triphasé 302 ;
un ensemble de circuits de mesure (304) agencé pour mesurer la tension et/ou le courant associés à chaque phase du distributeur ;
un processeur (310) agencé pour traiter les mesures fournies par l'ensemble de circuits de mesure (304) ; et
un contacteur triphasé (100) disposé entre les extrémités du distributeur triphasé segmentant le distributeur triphasé en un premier segment (320), connecté à une charge ou un générateur (350), et un deuxième segment (330), connecté à une charge respective ou un générateur respectif (350), ledit contacteur triphasé (100) étant agencé pour connecter
le premier segment (320) et le deuxième segment (330) en série, le contacteur triphasé (100) comprenant :

trois bornes (102, 104, 106) de premier segment (320) ;
trois bornes (110, 112, 114) de deuxième segment (330) ; et
une pluralité de composants d'interconnexion de bornes (120) agencés pour être configurés sélectivement selon au moins trois configurations,

dans une première des trois configurations, une première des bornes (102, 104, 106) de premier segment (320) étant couplée à une première des bornes (110, 112, 114) de deuxième segment (330), une deuxième des bornes (102, 104, 106) de premier segment (320) étant couplée à une deuxième des bornes (110, 112, 114) de deuxième segment (330) et une troisième des bornes (102, 104, 106) de premier segment (320) étant couplée à une troisième des bornes (110, 112, 114) de deuxième segment (330),
et dans une deuxième des trois configurations, la première des bornes (102, 104, 106) de premier segment (320) étant couplée à la deuxième des bornes (110, 112, 114) de deuxième segment (330), la deuxième des bornes (102, 104, 106) de premier segment (320) étant couplée à la troisième des bornes (110, 112, 114) de deuxième segment (330) et ladite troisième des bornes (102, 104, 106) de premier segment (320) étant couplée à la première des bornes (110, 112, 114) de deuxième segment (330),
et dans une troisième des trois configurations, ladite première des bornes (102, 104, 106) du premier segment (320) étant couplée à la troisième des bornes (110, 112, 114) de deuxième segment (330), ladite deuxième des bornes (102, 104, 106) du premier segment (320) étant couplée à la première des bornes (110, 112, 114) de deuxième segment (330) et ladite troisième des bornes (102, 104, 106) de premier segment (320) étant couplée à la deuxième des bornes (110, 112, 114) de deuxième segment (330),
segmentant ainsi le distributeur triphasé en le premier segment (320) couplé aux bornes (102, 104, 106) du premier segment (320) et le deuxième segment (330) couplé aux bornes (110, 112, 114) du deuxième segment (330),
ledit ensemble de circuits de mesure (304) comprenant un ensemble de circuits de mesure (304) de premier segment (320) agencé pour mesurer l'un ou plusieurs de la tension, du courant de chaque phase du premier segment (320) et du courant de neutre.

2. Système distributeur triphasé selon la revendication 1, ledit ensemble de circuits de mesure (304) comprenant un ensemble de circuits de mesure (304) de deuxième segment (330) agencés pour mesurer la tension et/ou le courant de chaque phase du deuxième segment (330) adjacent aux bornes (110, 112, 114) de deuxième segment (330) du contacteur triphasé (100) ou aux bornes (102, 104, 106) de premier segment (320) du contacteur triphasé (100).

3. Système distributeur triphasé selon la revendication 1 ou 2, un ou plusieurs parmi :

lesdites mesures fournies par l'ensemble de circuits de mesure (304) de premier ou de deuxième segment (330) étant combinées par le processeur (310) sous forme de mesures combinées et étant comparées à d'autres mesures combinées mesurées dans différentes configurations de contacteur triphasé (100) ou configurations de contacteur triphasé (100) combinées, pour déterminer laquelle des configurations de contacteur triphasé (100) ou des configurations de contacteur triphasé (100) combinées est une configuration souhaitée qui possède la plus basse des valeurs de tension maximales ou des valeurs de courant combinées ou de courant neutre ; ou la plus élevée des valeurs de tension minimales ; et
les mesures déséquilibrées fournies par l'ensemble de circuits de mesure (304) du premier ou du deuxième segment (330) étant comparées par le processeur (310) avec une ou plusieurs valeurs stockées, pour déterminer laquelle des configurations de contacteur triphasé (100) ou des configurations de contacteur triphasé (100) combinées est la configuration souhaitée ; et
lesdites valeurs de courant neutre mesurées par un ensemble de circuits de mesure (304) dans le premier ou le deuxième segment (330) étant comparées à d'autres valeurs de courant neutre mesurées dans différentes configurations de contacteur triphasé (100) ou configurations de contacteur triphasé combinées (100), pour déterminer laquelle des configurations de contacteur triphasé ou des configurations de contacteur triphasé combinées (100) est la configuration souhaitée.

4. Système distributeur triphasé selon la revendication 1 ou 2,
lesdits composants d'interconnexion de bornes (120) comprenant un ou plusieurs contacteurs, disjoncteurs électromécaniques, thyristors, transistors ou dispositifs électroniques de puissance ; et/ou
au moins certains des composants d'interconnexion de bornes (120) comprenant des contacteurs mécaniques chacun en parallèle avec un dispositif à semi-conducteur respectif.

5. Système distributeur triphasé selon l'une quelconque des revendications précédentes :

    ledit processeur (310) étant agencé pour communiquer avec un dispositif de commande (202) ; et
    le dispositif de commande étant couplé aux composants d'interconnexion de bornes (120) et étant agencé pour commander sélectivement les composants d'interconnexion de bornes (120) dans les au moins trois configurations.

6. Système distributeur triphasé selon la revendication 4 ou 5, ledit dispositif de commande étant agencé pour commander sélectivement les composants d'interconnexion de bornes (120) :

    en envoyant des signaux de commande d'actionnement aux composants d'interconnexion de bornes (120) pour qu'ils s'ouvrent ;
    en traitant des signaux indiquant l'état ouvert et fermé des composants d'interconnexion de bornes (120) pour déterminer que les composants d'interconnexion de bornes (120) sont ouverts ; et
    en envoyant, lorsque les composants d'interconnexion de bornes (120) ont été déterminés comme étant ouverts, un signal de commande d'actionnement aux composants d'interconnexion de bornes (120) pour se fermer afin d'obtenir l'une des au moins trois configurations.

7. Système distributeur triphasé selon l'une quelconque des revendications précédentes, agencé pour être configuré sélectivement en trois configurations non restreintes permettant ainsi la commutation des rotations de phase,
    dans une première des configurations non restreintes, ladite première des bornes (102, 104, 106) du premier segment (320) étant couplée à la deuxième des bornes (110, 112, 114) du deuxième segment (330),
    ladite deuxième des bornes (102, 104, 106) du premier segment (320) étant couplée à la première des bornes (110, 112, 114) du deuxième segment (330) et ladite troisième des bornes (102, 104, 106) du premier segment (320) étant couplée à la troisième des bornes (110, 112, 114) du deuxième segment (330),
    et dans une deuxième des configurations non restreintes, ladite première des bornes (102, 104, 106) de premier segment (320) étant couplée à la troisième des bornes (110, 112, 114) de deuxième segment (330), ladite deuxième des bornes (102, 104, 106) de premier segment (320) étant couplée à la deuxième des bornes (110, 112, 114) de deuxième segment (330) et ladite troisième des bornes (102, 104, 106) de premier segment (320) étant couplée à la première des bornes (110, 112, 114) de deuxième segment (330),
    et dans une troisième des configurations non restreintes, ladite première des bornes (102, 104, 106) de premier segment (320) étant couplée à la première des bornes (102, 104, 106) de deuxième segment (330), ladite deuxième des bornes (102, 104, 106) du premier segment (320) étant couplée à la troisième des bornes (110, 112, 114) de deuxième segment (330) et ladite troisième des bornes (102, 104, 106) de premier segment (320) étant couplée à la deuxième des bornes (110, 112, 114) de deuxième segment (330).

8. Système distributeur triphasé selon l'une quelconque des revendications précédentes, comprenant un second contacteur triphasé (100) disposé entre les extrémités du deuxième segment (330), segmentant ainsi le deuxième segment (330) en un deuxième segment (430) et un troisième segment (435), connecté à une charge respective ou un générateur respectif (350), ledit second contacteur triphasé (100) connectant le deuxième segment (430) et le troisième segment (435) en série.

9. Système distributeur triphasé selon la revendication 5 ou l'une quelconque des revendications dépendant de celle-ci, ledit dispositif de commande étant agencé pour ne pas changer une configuration des composants d'interconnexion de bornes (120) lorsqu'une mesure provenant au moins de l'ensemble de circuits de mesure (304, 506) de premier ou de deuxième segment est inférieure à une valeur prédéfinie.

10. Système distributeur triphasé selon la revendication 4 ou 5 ou d'une quelconque revendication dépendant de celle-ci, ledit dispositif de commande étant agencé pour minimiser le découplage de la charge et de génération de chaque côté du contacteur triphasé (100) en commençant par commander sélectivement aux composants d'interconnexion de bornes (120) de passer de la configuration sélectionnée parmi les au moins trois configurations à une configuration différente parmi les au moins trois configurations :

    en envoyant un signal de commande d'actionnement à un composant d'interconnexion de bornes fermé pour ouvrir ;

en traitant un signal indiquant l'état du composant d'interconnexion de bornes pour déterminer que le composant d'interconnexion de bornes est ouvert, établissant ainsi qu'une borne a été découplée avec succès du réseau de distribution ; et

en envoyant, lorsque le découplage d'une borne du réseau de distribution a été établi, un signal de commande d'actionnement à un autre composant d'interconnexion de bornes pour se fermer afin de coupler ladite borne découplée au réseau de distribution et fournir un premier des trois couplages de la différente configuration parmi les au moins trois configurations.

11. Procédé de réglage d'un déséquilibre de courant ou de tensions phase-neutre dans un système distributeur triphasé comprenant un distributeur triphasé fournissant des charges et/ou des générateurs monophasés et/ou polyphasés avec des connexions électriques au niveau de points arbitraires le long du distributeur triphasé (302) et au moins un contacteur triphasé (100) segmentant le distributeur triphasé en un premier segment (320) et un deuxième segment (330) possédant des bornes (102, 104, 106) de premier segment (320) et des bornes (110, 112, 114) de deuxième segment (330), ledit au moins un contacteur triphasé (100) comprenant un premier contacteur triphasé (100) disposé entre les extrémités du distributeur triphasé segmentant ainsi le distributeur triphasé en un premier segment (320), connecté à une charge ou un générateur (350), attaché aux bornes (102, 104, 106) du premier segment (320) et un deuxième segment (330), connecté à une charge respective ou un générateur respectif (350), attaché aux bornes (110, 112, 114) de deuxième segment (330), ledit premier contacteur triphasé (100) connectant le premier segment (320) et le deuxième segment (330) en série, le procédé comprenant :

la détermination de la tension maximale ou de la tension minimale ou des valeurs de courant combinées ou du courant neutre dans au moins un segment pour chaque permutation permise de la configuration de contacteur triphasé (100), dans une première des trois configurations, une première des bornes (102, 104, 106) de premier segment (320) étant couplée à une première des bornes (110, 112, 114) de deuxième segment (330), une deuxième des bornes (102, 104, 106) de premier segment (320) étant couplée à une deuxième des bornes (110, 112, 114) de deuxième segment (330) et une troisième des bornes (102, 104, 106) de premier segment (320) étant couplée à une troisième des bornes (110, 112, 114) de deuxième segment (330), et dans une deuxième des configurations, ladite première des bornes (102, 104, 106) de premier segment (320) étant couplée à la deuxième des bornes (110, 112, 114) de deuxième segment (330), ladite deuxième des bornes (102, 104, 106) de premier segment (320) étant couplée à la troisième des bornes (110, 112, 114) de deuxième segment (330) et ladite troisième des bornes (102, 104, 106) de premier segment (320) étant couplée à la première des bornes (110, 112, 114) de deuxième segment (330), et dans une troisième des configurations, ladite première des bornes (102, 104, 106) de premier segment (320) étant couplée à la troisième des bornes (110, 112, 114) de deuxième segment (330), ladite deuxième des bornes (102, 104, 106) de premier segment (320) étant couplée à la première des bornes (110, 112, 114) de deuxième segment (330) et ladite troisième des bornes (102, 104, 106) de premier segment (320) étant couplée à la deuxième des bornes (110, 112, 114) de deuxième segment (330) ;

la comparaison des valeurs de courant combinées, de courant neutre, de tension maximale ou de tension minimale dans au moins un segment du système dans chacune des configurations permises pour déterminer laquelle des configurations est une configuration souhaitée qui présente la plus basse des valeurs de tension maximales ou des valeurs de courant combinées ou de courant neutre ; ou la plus élevée des valeurs de tension minimales ; et la configuration du contacteur triphasé (100) dans la configuration souhaitée.

12. Procédé selon la revendication 11, ladite détermination étant **caractérisée par** :

la mesure des valeurs de tension et/ou de courant pour chaque phase lorsque le contacteur triphasé (100) est dans une configuration sélectionnée des configurations ; et/ou

le calcul des valeurs de courant ou de tension phase-neutre pour chaque phase pour les configurations non sélectionnées à l'aide des résultats de la mesure ; ou

ladite détermination étant **caractérisée par** : la mesure des valeurs de courant ou de tension phase-neutre pour chaque phase lorsque le contacteur triphasé (100) est dans une configuration sélectionnée des configurations ;

la commutation vers chacune des autres configurations ; et la mesure des valeurs de tension et/ou de courant pour chaque phase pour chacune des autres configurations ;

éventuellement, ladite mesure étant **caractérisée par** la mesure d'au moins une valeur de courant dans le conducteur de neutre.

**13.** Procédé selon la revendication 11 ou 12, ledit au moins un contacteur triphasé (100) comprenant un second contacteur triphasé (100) disposé entre les extrémités du deuxième segment (330) segmentant ainsi le deuxième segment (330) en un deuxième segment (430) et un troisième segment (435), connecté à une charge respective ou un générateur respectif (350), ledit second contacteur triphasé (100) connectant le deuxième segment (430) et le troisième segment (435) en série, ladite détermination comprenant la détermination des valeurs de courant combinées ou de courant de neutre dans au moins un segment, des valeurs de tension maximales ou des valeurs de tension minimales pour toutes les permutations du premier contacteur triphasé (100) combinées avec les configurations du second contacteur triphasé (100).

**14.** Procédé selon l'une quelconque des revendications 11 à 13, l'un de :

    ledit procédé étant invoqué à des heures fixes chaque jour ;
    ledit procédé étant invoqué à des intervalles de temps prédéfinis ; ou
    ledit procédé étant invoqué en raison d'une mesure de tension dépassant une valeur prédéfinie.

**15.** Procédé selon l'une quelconque des revendications 11 à 14, avant la configuration, ledit procédé comprenant une étape d'ouverture de tous les couplages entre les bornes (102, 104, 106) du premier segment (320) et les bornes (110, 112, 114) du deuxième segment (330)
et ensuite la réalisation du processus de configuration ; éventuellement, ledit contacteur triphasé (100) comprenant des contacteurs chacun en parallèle avec un dispositif à semi-conducteur respectif, et ladite étape d'ouverture comprenant :

    l'ouverture des interrupteurs ;
    la détection que les interrupteurs sont ouverts ; et
    la commande des dispositifs semi-conducteurs vers un état de circuit ouvert.

Figure 1A

Figure 1B

Figure 1C

Figure 1D

Figure 1E

Figure 1F

EP 3 338 335 B1

Figure 2

EP 3 338 335 B1

30

Figure 3

Figure 4

400

Figure 5

EP 3 338 335 B1

Figure 6

Figure 7

Figure 8

910

INVOKE?    NO

YES

915

VOLTAGE OR
CURRENT
ANALYSIS?    VOLTAGE ANALYSIS

CURRENT ANALYSIS

920

DETERMINING CURRENT VALUES
FOR EACH CONFIGURATION

925

DETERMINING CURRENT AND
VOLTAGE VALUES FOR EACH
CONFIGURATION

930

COMBINING TO PROVIDE
COMBINED VALUES

935

EQUATING TO MAXIMUM
VALUES

940

COMPARING THE COMBINED
VALUES

945

FIND THE MINIMUM MAXIMUM
VALUE

950

NO    CHANGE
CONFIGURATION?

YES

960

CONFIGURING INTO DESIRED
CONFIGURATION

900

Figure 9

SEND 'OPEN ALL TERMINAL INTERCONNECTING COMPONANTS' COMMAND SIGNALS

1020

YES

CHANGE CONFIGURATION COMMAND RECEIVED FROM METHOD 900?

1010

NO

ARE ALL TERMINAL INTERCONNECTING PHASE CONDUCTOR COUPLINGS OPEN?

1030

NO

YES

SEND 'MAKE NEW SWITCH 100 CONFIGURATION' COMMAND SIGNALS TO TERMINAL INTERCONNECTING COMPONANTS

1040

1060

SEND CONFIRMATION TO PROCESSOR 310 THAT THE CHANGE IN PHASE SWITCH 100 CONFIGURATION WAS SUCESSFUL

HAS NEW SWITCH 100 CONFIGURATION BEEN ACHIEVED?

1050

NO

YES

1000

Figure 10

Figure 11

# 1. A Three Phase Switch 100 Phase Switch

*Switch from:*

*Switch to:*

Figure 12A

1200

EP 3 338 335 B1

# 2. Distributor Currents in a Three Phase Switch

$I_{102} = I_{110}$

$I_{104} = I_{112}$

$I_{106} = I_{114}$

Figure 12A

EP 3 338 335 B1

1200

## 3.

## Switch Begins
## t=13.33ms

*Open coupling $I_{106}$ to $I_{114}$*

Disconnection

Figure 12A

EP 3 338 335 B1

# 4.    During Switch
## t=16.66ms

Open coupling $I_{104}$ to $I_{112}$

Figure 12A

EP 3 338 335 B1

1200

# 5. *During Switch*
## *t=20ms*

*Open coupling* $I_{102}$ *to* $I_{110}$

Disconnection

3.33ms     3.33ms

6.67ms     6.67ms

terminal disconnection time

1200

Figure 12A

EP 3 338 335 B1

# 6.

## *During Switch*
## *t=23.33ms*

*Close coupling $I_{106}$ to $I_{110}$*

Reconnection

3.33ms     3.33ms

6.67ms     6.67ms

10ms     10ms

terminal disconnection time

1200

Figure 12A

EP 3 338 335 B1

# 7.

# During Switch
# t=26.66ms

Close coupling $I_{104}$ to $I_{114}$

6.67ms    3.33ms

10ms    10ms

10ms    13.33ms

terminal disconnection time

Reconnection

1200

Figure 12B

EP 3 338 335 B1

*8.*

## *During Switch*
## *t=30ms*

Close coupling $I_{102}$ to $I_{112}$

Reconnection

10ms          3.33ms

10ms          13.33ms

10ms          13.33ms

terminal disconnection time

1200

Figure 12B

# 9.

## *Switch Complete*

$$I_{102} = I_{112}$$
$$I_{104} = I_{114}$$
$$I_{106} = I_{110}$$

*Where:*

$$t \gtrsim 30 \text{ ms}$$

Figure 12B

EP 3 338 335 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014191692 A1
- EP 0567801 A2
- WO 2014053989 A2